**Europäisches Patentamt**

**European Patent Office**

**Office européen des brevets**

(19)

(11) Publication number: **0 051 745**
**B1**

(12) **EUROPEAN PATENT SPECIFICATION**

(45) Date of publication of patent specification: **27.01.88**

(21) Application number: **81107928.4**

(22) Date of filing: **05.10.81**

(51) Int. Cl.⁴: **G 06 F 12/08**

│ E R R A T U M │

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | LAUTET BERICHTIGT:<br>SHOULD READ :<br>DEVRAIT ETRE LU : |
|---|---|---|---|
| für Cache-Zellen anzeigt | 19 | 11 | für Cache-Zeilen anzeigt |
| für Befehleabruf-Prozessoranfor-<br>derungen; | | 21 | für Befehlsabruf-Prozessoranfor-<br>derungen; |
| 3. Speicherheirarchie | | 33 | 3. Speicherhierarchie |

Tag der Entscheidung
über die Berichtigung )
Date of decision on ) **15.02.88**
rectification: ).....................
Date de décision portant )
sur modification: )

Ausgabe- und Ver-
öffentlichungstag: )
Issue and publication ) **20.04.88**
date: ).....................
Date d'edition et de )
publication: )

Patbl.Nr.)
EPB no:) **88/16**.......
Bull. no:)

Europäisches Patentamt

European Patent Office

Office européen des brevets

(19)

(11) Publication number: **0 051 745
B1**

(12) **EUROPEAN PATENT SPECIFICATION**

(45) Date of publication of patent specification: **27.01.88**

(51) Int. Cl.⁴: **G 06 F 12/08**

(21) Application number: **81107928.4**

(22) Date of filing: **05.10.81**

(54) Cache storage hierary for a multiprocessor system.

(30) Priority: **10.11.80 US 205500
10.11.80 US 205486**

(43) Date of publication of application:
**19.05.82 Bulletin 82/20**

(45) Publication of the grant of the patent:
**27.01.88 Bulletin 88/04**

(84) Designated Contracting States:
**DE FR GB IT**

(56) References cited:
**FR-A-2 344 094
FR-A-2 444 299
US-A-3 723 976
US-A-3 735 360
US-A-3 771 137
US-A-4 136 386
IBM TECHNICAL DISCLOSURE BULLETIN, vol.
16, no. 3, August 1973, pages 926-27, New York
(USA); R.E.NIELSEN: "Encoded exclusive data
for multiprocessing system"**

**IBM TECHNICAL DISCLOSURE BULLETIN, vol.
22, no. 8A, January 1980, pages 3331-3333,
New York (USA); J.M.LEE et al.: "A solution to
the synonym problem"**

(73) Proprietor: **International Business Machines
Corporation
Old Orchard Road
Armonk, N.Y. 10504 (US)**

(72) Inventor: **Chan, Shiu Kwong
8 Sutton Park Rd.
Poughkeepsie, N.Y. 12 603 (US)**
Inventor: **Flusche, Frederick Otto
Matuk Drive Hyde Park
New York 12 538 (US)**
Inventor: **Gerardi, John Anthony
5 Malros Terrace
Poughkeepsie, N.Y. 12 601 (US)**
Inventor: **Gustafson, Richard Neil
Julia Drive Hyde Park
New York 12538 (US)**
Inventor: **McGilvray, Bruce Lloyd
McAllister Drive
Pleasant Valley, N.Y. 12 569 (US)**

(74) Representative: **Teufel, Fritz, Dipl.-Phys.
IBM Deutschland GmbH. Europäische
Patentdienste Postfach 265
D-8000 München 22 (DE)**

EP 0 051 745 B1

**Description**

This invention relates to a storage hierarchy for a multi-processor according to the preamble of claim 1.

In a data processing system with a storage hierarchy, selected lines of data in a main storage are copied in a high speed buffer, often called a cache, for fast access by a processor. Whenever the processor requests data, the system first checks the cache to determine whether the data is available in the cache; and if it is, the data is quickly provided to the processor. If the data is not available in the cache, the data is retrieved more slowly from the main memory. A portion of the untranslated logical address in each processor request is used to directly address the cache directory, rather than use its translated absolute address because system performance is significantly decreased by waiting for the translated address.

Recently the store-in-cache (SIC) has been found to provide better system performance than store through (ST) caches in large multiprocessor (MP) systems because the SIC has less bandwidth requirements to main storage than the ST. A processor having a SIC does not see main storage when it performs a write operation since the processor writes into the SIC, unlike a ST cache processor which writes directly in main storage. Thus, a processor with a SIC can only indirectly cause writes into main storage when cache misses occur, which happen only after the addressed entries in the cache are filled with changed data.

However, MPs using SICs have additional cache problems occurring because the latest version of a data line in a SIC may at any particular time only be found in one processor cache in the MP system and may not be available in the shared main storage (MS). In such case, a processor requiring, but not having the line, has no recourse other than to obtain the line from the other processor cache which contains the latest version. In U.S.A. patents 3 723 976 (Alvarez et al) or 3 771 137 (Barner et al) or 4 056 844 (Izumi), if the requesting processor made a fetch request for the line, it was always castout from and invalidated in the requested processor cache having the line and always implicitly was given exclusively to the requesting processor cache, either directly or through main storage. An MP improvement was obtained by the line shareability invented in U.S.A. patent 3 735 360 to Anderson et al which disclosed and claimed the fetch only (i.e. readonly) shareability designation provided for each line in each processor SIC directory. The fetch only control eliminated cross-interrogation between plural processor cache directories in an MP in the situation where the plural processors each held the line in fetch only state. Thus, for the first time, patent 3 735 360 to Anderson et al enabled parallel as well as serial shareability of lines in plural SICs in an MP. Thus, the novel feature of that patent enables plural processors in the MP simultaneously to have fetch only (i.e. readonly) access to the same line of data in their different caches when their fetch only bit was set to fetch only state, which eliminated cross-interrogation between caches and avoided invalidation, as long as no processor attempted to store into the data line. If any processor not having a line of data requested the fetch of the line when it was held either fetch only or exclusively in another processor cache, the line was then fetched into the requesting cache and was always shared by both processor caches. Regardless of whether the line was changed or not when it was designated not fetch only (i.e. exclusively) in the requested processor cache, the line was castout without invalidation and the line designation was changed to fetch only (i.e. readonly) state in the casting out processor cache.

Castout controls for the MP system having copy directories and command queues in its system controllers is disclosed and claimed in U.S.A patent 4 136 386 to Annunziata et al.

Caches in current systems are typically based on the concept of "set associativity", wherein a requester directly addresses a cache directory row (called a class) which may have several entries (called sets). The sets in a class are all associatively searched in parallel to determine if any one set in the class has the absolute (or real) address translated for the requested logical (or virtual) address. A set-associative cache is a compromise between a slowly-performing fully associative cache, in which any block of main storage may map into any position in the cache, and a fast-performing directly addressed cache, where each main storage address can map into only one class location in the cache. Fully associative caches have the liability of lengthy directory search time and an elaborate replacement (LRU) mechanism. Non-associatively addressed caches are the simplest to implement in terms of hardware, but yield significantly lower performance than the other two schemes due to increased overwriting of entries.

The size of a set-associative cache can be increased by either (1) increasing the number of classes in the cache directory by increasing the address range used to access a cache class, and/or (2) increasing the number of sets in each class. If system performance is not to be decreased, an increase in the set associativity requires extra hardware to examine all sets in the addressed class in parallel. Also, available integrated circuit packaging technology for cache directories does not easily lend itself to a substantial increase in set associativity. The constraints prefer that the cache size be increased by increasing the number of classes in the cache directory. However, as the number of classes in the cache directory is increased, eventually the directory address bits taken from a requesting logical address must expand beyond its non-translatable field (i.e. the D field) and into its translatable field.

The cache synonym problem occurs when the cache address uses bits from the translatable field of the logical address. A cache synonym exists when the data required by a requesting logical address is available in a cache class different from the class addressed by the request, synonyms may for example be caused by (1) requests which switch between virtual and real addresses for the same data, or (2) by one user addressing a line of data with one virtual address and another user addressing the same line with a

2

different virtual address which locates a different class in the cache, or (3) by reassignment of the page frame to be accessed by a logical address.

A random relationship exists between a logical address and its translated absolute address. This relationship is dependent upon the assignment of a logical address to any available page frame in main storage. Thus, a given logical address can translate to any absolute address in main storage where the assigned page frame happens to be located.

Accordingly, the values of the translated bits in an absolute address are only determined at the time of translation and they may have any value. Thus, the value in any subset of bit positions in the translatable field of an absolute address is not dependent upon the value in the corresponding subset of bit positions in the related logical address; and they may have any value within the range of their permutations.

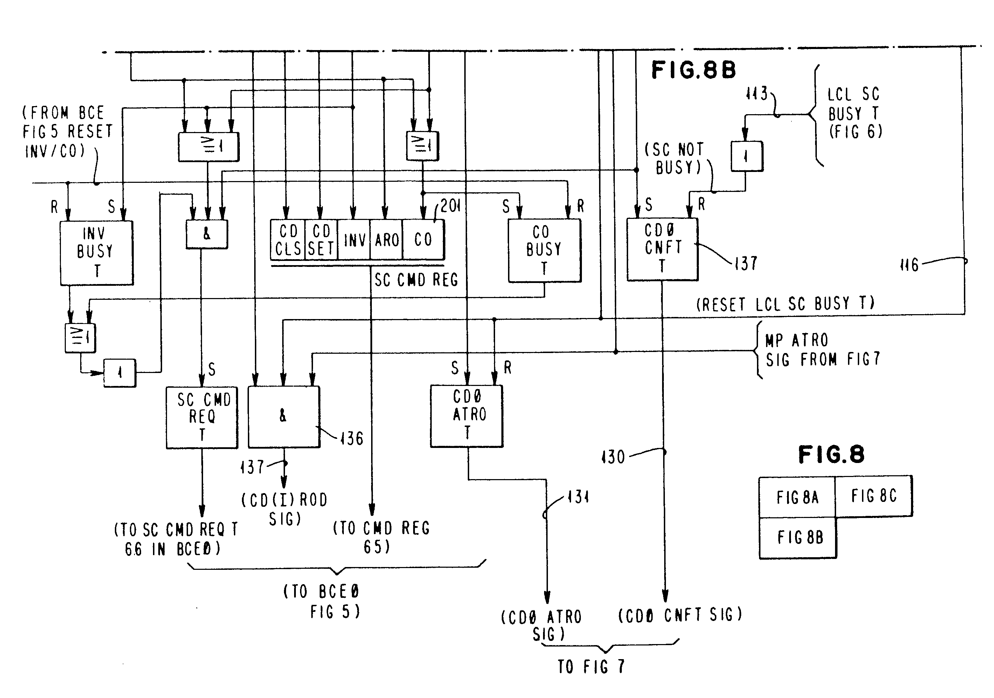

The already mentioned U.S. Patent 3 723 976 to Alvarez et al, teaches a different cache synonym technique not used in the subject application. In Alvarez, each processor (which is shown in a multi-processing environment) has associated with it a store-in-cache, a fetch directory (FD), a broadcast store directory (BSD), and a translation directory (TD). An entry in the FD is accessed by the logical (virtual) address bits 18—26 of a processor request, but the corresponding entry in the BSD is accessed by *real* address bits 18—26 obtained from TD as a translation of the requested logical address. Hence, the BSD is not a copy directory of the FD, because the correponding entries in BSD and FD for the same processor request can map to different locations in BSD and FD. The FD entries contain real addresses (bits 8—19), while the BSD entries contain a mixture of real and virtual address bits (i.e. real bits 8—17 and virtual bits 18, 19), in which the BSD virtual bits 18, 19 point to the corresponding entry in the FD. The virtual bits 18, 19 in a BSD entry locate a corresponding FD entry. The result is that a principle class is accessed in FD using the request address; and if the request misses in FD, BSD is then examined to determine if any synonym location exists in FD and therefore in the cache. A double replacement invalidation problem exists for 3 723 976 which is not found in an embodiment of the subject invention and is caused by corresponding entries in BSD and FD not being at the same directory address. The double replacement invalidation may occur when any valid FD entry is replaced by a new entry. This single FD entry replacement causes the invalidation of two FD entries and two BSD entries in the example in Alvarez Figure 7 which requires two invalidations and two block castouts from the cache when the invalidated blocks were changed. This double invalidation occurs when the new and replaced corresponding BSD entries are in different BSD locations. For any new FD entry, four possible corresponding BSD locations exist due to the four possible translatable values for virtual bits 18, 19. Hence, the replaced BSD entry corresponding to the replaced FD entry, and the new BSD entry corresponding to the new FD entry have a three out of four chance of occupying different BSD locations than the same BSD location.

A result of Alverez potential double replacement castout is duplication of attendant hardware, e.g. duplication of the line store buffers, duplication of related RAS hardware entities for castout, etc., and most of all the significant decrease in main storage (MS) performance due to cluttering the bus to MS with additional castouts, using up unnecessary bandwidth.

It is therefore the object of this invention to improve the overall performance of storage hierarchies of the above-mentioned kind, by reducing the number of cache cast-out operations.

This object is achieved by the invention as described in claim 1; embodiments of the invention are described in the dependent claims.

The invention reduces the number of cache misses (and hence castouts) by adjusting shareability indicators which may be used for processing of synonym cache addresses according to actual system parameters; the processing for implementing these adjustment operations occurs overlapped with other system functions (e.g. cross-interrogating) so that no or only little extra time is required.

There is no double replacement invalidation or double replacement castout with an embodiment of the subject invention, due to its use of a copy directory (CD) and processor directory (PD) combination instead of the FD and BSD combination used in the Alvarez patent, because corresponding CD and PD entries always map into the same address in both PD and CD, unlike the Alvarez FD and BSD. Also, an embodiment of the subject invention is capable of performing synonym detection with only a single directory, i.e. in the PD.

The synonym detection described permits an increase in cache size without an increase in cache directory set associativity.

This invention provides an improvement in overall MP system performance by providing an unobvious change in the way data line shareability for a fetch request is controlled by cache conflict determination hardware. More specifically the invention uses the most recently available information about the shareability of a line requested by one CPU which was used by another CPU to more efficiently control the line shareability of a fetch request. The shareability determination is made for a fetch requested data line and can ignore an exclusive request for the line by a CPU for the situations in which: (1) an unchanged version of the line exists in another CPU SIC which holds the line exclusively (i.e. not fetch only), or (2) the requesting CPU requests the line exclusively when the line is held readonly (i.e. fetch only) in another CPU SIC. The subject invention controls how the final shareability designation of the line in the requesting and remote SICs is affected by the changed/nonchanged state of that line in a remote SIC having that line. That is, this invention causes the exclusive or readonly shareability designation for the line in the receiving SIC to be dependent upon whether or not the line was changed in the sending SIC. When an exclusively

3

requested line has been changed in another SIC, the invention does not alter the line's exclusive designation to readonly in the other SIC or designate the line readonly in the requesting SIC (as is done in the prior Anderson et al patent). Instead, with an exclusive fetch request by one CPU for an exclusive line changed in another SIC, the invention casts out and invalidates that line in the other SIC and gives the line exclusively to the requesting SIC. But, if the requested line was not changed in the remote SIC, the invention does not invalidate the requested line even when held exclusively in the other SIC, but only alters its shareability designation from exclusive to readonly in both SICs so that both CPUs can have simultaneous fetch access to the line.

The reason for this unique handling of a line fetch request is based on the discovery (1) that a requested line probably will soon be changed in a requesting SIC if that line was changed in another SIC regardless of whether the CPU request is only for an exclusive or readonly fetch, and (2) that the line probably will not be changed if an exclusive request for the line finds the line unchanged in another SIC regardless of whether it is designated as exclusive or readonly in the other cache. This reduces the line miss overhead by reducing the frequency of line misses in the caches, since processors having simultaneous readonly access to the same line in their caches do not generate line misses by their fetch accessing. But if they each were exclusively given a line in alternate fashion, line misses and their long access time would thereby alternately occur, which is called line thrashing.

In this manner, the invention provides an intra-SIC designation control method and means which substantially reduces the amount of thrashing of lines back and forth between caches to significantly increase the performance of an MP.

In other words, in an MP configuration utilizing a "store in buffer" cache, the improper sharing control of data can produce significant performance degradation. The objective is to bring data and instructions into a processor cache (by line) with a designated exclusive/readonly shareability that controls the serial/parallel access to the line by plural CPUs. This will allow multiple processors to dynamically share lines which are truly readonly (RO) and minimize the disruption (performance loss) due to changes in the (EX/RO) shareability designation and/or invalidation of cache lines. In all cases, data integrity is maintained in that the most up-to-date data is always available to each processor accessing any line.

Lines brought in to a SIC due to instruction fetching are requested with RO shareability because they will probably not be written into, thus allowing multiple processors to simultaneously access the same instructions. Lines referenced to obtain operand data present a different problem. A cache miss due to an operand store request is brought in with EX shareability after the castout of the appropriate line from any other SIC having a changed version of the line. A cache miss due to an operand fetch request is handled as follows:

1. If a line does not exist in any SIC, the line will be fetched from MS and brought into the requesting SIC with EX shareability to permit subsequent stores therein with no disruption to the cache operation.

2. If a line only exists in another SIC due to EX shareability and has been changed, then it is judged probable that the next use of the line in the requesting SIC will also change the data. Then the line is brought into the requesting SIC with the EX designation after a castout of the line from the other SIC.

3. If a line exists in another SIC with EX designation and has not been changed, then it is judged probable that the next use of the line will not change it. Thus, the line is brought into the requesting SIC with RO shareability while leaving the line also in the other SIC with RO shareability.

4. If a line exists in another SIC with RO designation, then it is judged probable that the next use of the line in the requesting SIC will not change it. Thus, the line is brought into the requesting SIC with RO shareability while leaving the line also in the other SIC with RO shareability.

5. If a readonly bit is set on in page table entries in MS, any line fetched from the associated page will only be brought into a requesting SIC with RO shareability, regardless of the type of CPU request used to access the page.

These shareability indicators may be used for handling synonyms for a store-in-cache (SIC).

If the shareability control bit EX is on in the cache directory entry, the line is locked in the cache for a checkpoint interval and the data is accessed in the detected synonym location in the SIC. (Checkpointing is described in U.S.A. patent 3 736 566). If the EX bit is off representing readonly state, the line is not locked during the checkpoint interval, and the data is not accessed in the detected synonym location. Instead, the RO line is copied into the principle location (i.e. addressed by the current logical address) to improve system performance.

Ways to carry out the invention are now described in detail with reference to the drawings, where

Figure 1 is a block diagram of a multiprocessing system utilizing the subject invention;

Figures 2A and 2B illustrate the tag bits found respectively in the processor directories and copy directories for each line represented therein;

Figures 3A, 3B, 3C and 3D illustrate the types of information found in various commands used in the described embodiment of the invention;

Figures 4A, 4B, 4C, 4D, 4E, 4F, 4H, 4J, 4K, 4L, 4M, 4N, 4P, 4Q, 4R, 4S, 4T, 4U, 4V and 4X represent timing diagrams showing the sequencing of operations in the described embodiment;

Figure 5 illustrates the pertinent processor buffer control element (BCE) found in each central processor (CPU) shown in Figure 1;

Figure 6, 7, 8A, 8B, 8C and 9 illustrate the pertinent controls found in each system controller (SC) shown in Figure 1;

Figure 10 illustrates in detail the copy directory (CD) addressing circuits shown as a block in Figure 8C;

Figure 11 shows in detail the synonym search alter circuits represented as a block in Figure 8C;

Figure 12 shows in detail the synonym capture circuits represented as a block in Figure 8C;

Figure 13 illustrates in detail the BCE response controls shown in a block in Figure 5;

Figure 14 shows in detail the PD class addressing controls represented in a block in Figure 5;

Figure 15 shows in detail the PD set input controls shown in a block in Figure 5;

Figure 16 shows in detail the change bit test circuit in the BCE response controls shown in a block in Figure 5;

Figure 17 shows cache miss detection circuits which are provided at the output of the processor directory shown in Figure 5;

Figure 18 illustrates a second embodiment of the invention.

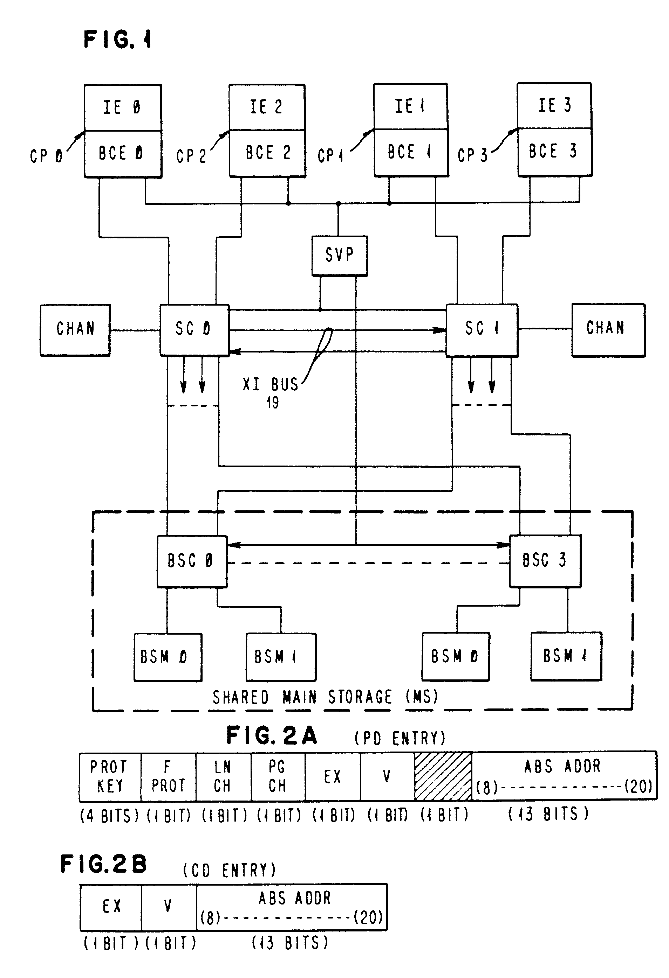

Figure 1 represents a background multiprocessing (MP) system containing the described embodiment of the invention. The MP illustrated in Figure 1 comprises four central processors CP0 through CP3, in which each CP includes an instruction execution (IE) unit and a buffer control unit (BCE). Each IE includes the hardware and microcode which issue instructions which require the fetching and storing of operands in main storage (MS). The IE begins a fetching or storing operation by issuing a fetch or store command to its cache controls (BCE), which includes a processor store-in-cache (SIC) with its associated processor cache directory (PD) and all processor cache controls which are exclusively used by the associated CP. The CP generally issues a fetch or store command for each doubleword (DW) unit required by an operand. If the DW is in the PD (as in the case with most processor fetch and store commands), the DW is fetched or stored in the cache in accordance with the command, and the command is completed without any need to go outside of the BCE. Occasionally the required DW is not in the cache, which results in a cache miss. Before the IE fetch or store command can be completed, the DW must be fetched from MS. To do this, the BCE generates a corresponding fetch or store miss command which requests an associated system controller (SC) to obtain from MS a line unit of data having the DW required by the IE. The line unit will be located in MS on a line boundary, but the required DW will be the first DW in the fetched line to be returned to the requesting BCE.

In the MP in Figure 1, two system controllers SC0 and SC1 are each connected to two CPs and to the shared main storage (MS), so that either connected processor can access any shared area in main storage. Each SC also connects I/O to the shared main storage. Each SC may include the subject matter disclosed in European patent applications 79 105 164 (publication number 12951) and 80 103 081 (publication number 21144).

The shared main storage comprises of a plurality of BSM controllers BSC0 through BSC3 in which each BSC connects to two BSMs 0 and 1. The four BSCs 0—3 are each connected to each SC.

A cross-interrogate (XI) bus connects from each SC to the other SC. The XI bus communicates all cross-interrogation (XI) requests and all castout (CO) and invalidate (INV) signals between the SCs to synchronize and coordinate the required castouts, MS fetches, and invalidations in the directories.

Each SC contains a pair of copy directories. Each copy directory (CD) contains an image of the contents of a corresponding processor cache directory (PD) in one of the BCEs connected to the respective SC. Both PD and CD are addressed by the same bit positions from the logical address.

The copy directories handle all cross-interrogation (XI) requests, so that the processor cache directories in the various BCEs will not need to handle the XI interrogation requests and can thereby better service their respective CPs. The XI bus connects all SCs and synchronizes all CD searches for conflicts so that XI searching is avoided in the PDs.

Each of the other CPs 1—3 has an IE identical to the IE0. Each IE unit is basically similar to IE units found in conventional microprogrammed processors.

A doubleword wide bidirectional bus is provided between each BSM in main storage (MS) and each SC port, and from each SC to each associated central processor (CPU) and I/O channel controller (EXDC) processor. Both commands and data may be sent on any bus. When a CPU cannot find a requested doubleword (DW) in its cache, its buffer control unit (BCE), which controls the CPU cache, initiates a line access request to MS by sending a miss command to its associated system controller (SC), which then reissues the command to a required BSM in main storage. In the event of a BSM busy condition, the SC will save the request in a command queue and will reissue it at a later time when the required BSM becomes available. The SC also sequences the MS commands in an orderly fashion, so that all commands to a particular BSM are issued in first-in/first-out (FIFO) order, except when a cache conflict is found. Prior to issuing a MS line command, a real address to physical address transformation is performed by the SC to determine the BSM location of the real address. See European patent application 79 105 164 (EP—A—0 012 951). At the same time, the request is sent to the storage key array to check for a possible access storage protection violation, as well as to the copy directories in all SCs to search for a possible data contention conflict. Thus, during the normal sequence of handling a MS request, the SC is constantly monitoring the status of main storage, is analyzing the interrogation results of the storage protect key and all cache directories, is examining the updated status of all pending commands currently being held in the

# 0 051 745

SC, and is also looking for any new BCE commands that may be waiting in the BCE to be received by the SC.

The main storage protect key arrays are located in the system controller as described and claimed in European patent application 80 103 081 (EP—A—0 021 144). It performs all key operations defined by the IBM system/370 architecture. Normally, the storage key is checked in parallel with the issuance of the request to memory and this check does not interfere with actual main storage access time.

Due to the store-in-cache (SIC) design of each CP cache, CP changed data resides in the CP SIC and is not available in MS until the data is castout of the SIC by the cache line replacement mechanism whenever cache line space is required for newly requested lines. Each SIC has a processor cache directory (PD) which controls its SIC operations.

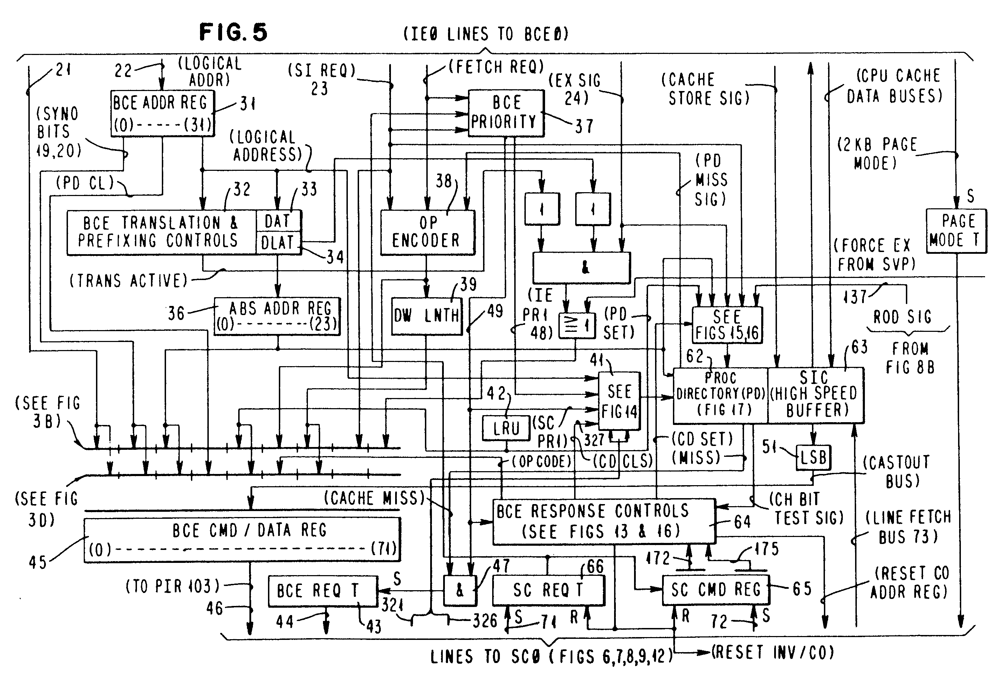

Because of the nature of a CP store-in-cache (SIC), each CP's updated lines in its SIC are not stored in MS immediately. Thus, many lines of shareable, unchanged and changed data may be scattered among the SICs. Unchanged SIC lines are available in MS, but changed lines are only available in the SIC in which they reside. Each SIC line is given a shareability designation, which is used by the MP cache management controls to apply appropriate control over the type of shareability of each line while in one or more SICs in the MP. In general, any IE requests instructions with the parallel shareability designation of readonly, because instructions are not expected to be changed. However, operand data are generally requested by the IE with the serial shareability designation of exclusive, because they are to be changed, or are likely to be changed. The IE shareability designation is provided in Figure 5 on line 24, on which an up signal state indicates an exclusive (EX) designation for the current IE request, while a down signal state indicates a readonly (RO) designation for the current IE request to the BCE in the CP.

Although a CP request may be for a doubleword (DW), unit for the CP, it is accessed from a line unit of operand data and/or instructions in its cache. Main storage accessing efficiency is greatly improved by having line units of plural DWs (e.g. 16 DWs) accessed as a unit in MS for each cache, and each cache directory is organized to manage its content on a line basis. Therefore, the shareability designation in the cache is done on a line unit and not on a DW unit basis.

The line shareability designation is checked for each CP DW unit access in the cache and any IE store request causes a cache miss when the shareability designation for the accessed line is RO; but any IE fetch request is immediately accessed. If the line designation is EX, both IE fetch and IE store requests are immediately accessed into the line in the cache.

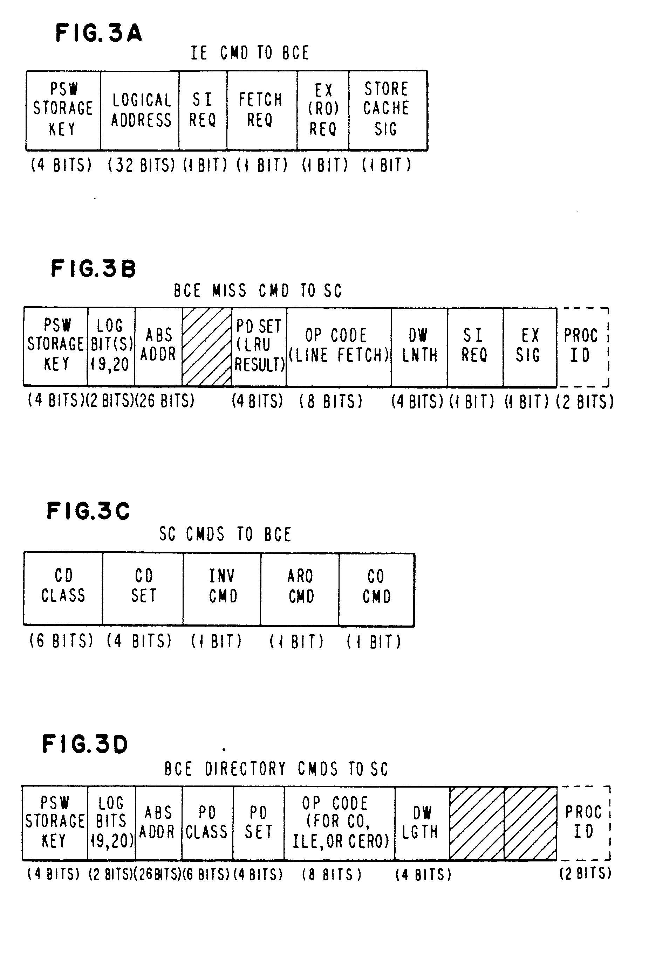

Therefore, when any IE initiates an operand or instruction fetch request, the IE issues a fetch command such as shown in Figure 3A for a doubleword (DW) of data or instructions to its BCE with one of the following two types of sharing control designations:

Readonly (RO)

The DWs in the line in the cache may immediately be fetched. All CPs can simultaneously access the line in their processor SICs as long as they need only fetch the data in the line. Any CP store request for a DW in a line designated RO causes a cache miss which changes the designation to EX and forces any other CP sharing the line RO to invalidate its copy of the line.

Exclusive (EX)

The DWs in the line may be fetched or stored into by the CP possessing the line exclusively. No other CP can access the line. If another CP must access the line, the CP possessing the line must give up the line to the CP requesting the line which then becomes the only CP possessing the line. If the possessing CP has stored into the line (i.e. changed it) the possessing CP has the latest version of the line; and the line version in MS is not the latest version and should not be accessed. Therefore, the possessing CP must castout a changed line to MS to provide the latest version in MS whenever another CP is to obtain the line, whether or not the possessing CP will continue to possess the line with a readonly designation.

The present invention has recognized, that a line designation can be changed from exclusive to readonly to enable parallel shareability in spite of IE requests for exclusivity; it has further recognized, that the directory line shareability designations can be used to advantage in the way cache synonyms are handled.

The current line shareability designations in each SIC in the MP are contained in the processor directory (PD) associated with each SIC in the MP. The BCE containing each PD enforces the rules pertaining to the shareability designations in the PD, and generates a cache miss for the current IE request whenever the requested PD class does not contain an entry with the translated request address. A request in a synonym entry will cause a cache miss. Inter-CP communication is required for servicing each cache miss.

The implementation of these shareability rules is complicated by having copy directories (CDs) control the inter-CP communication of CP requests, but the CDs are needed to reduce interference with normal SIC operation due to inter-CP communications.

The nomenclature used herein distinguishes the issuing CP (which may be any CP0—CP3 in the MP issuing a storage request command being XIed) from each of the remote CPs (which is the remaining CPs of CP0—CP3 that did not issue the command for which they are being XIed). The issuing CP and all of its associated cache entities (i.e. its IE, BCE, PD, SIC and CD) are identified with the suffix (I), i.e. IE(I), BCE(I),

6

PD(I), SIC(I) and CD(I). Every remote CP and all of its cache entities are identified with the suffix (R), i.e. IE(R), BCE(R), PD(R), SIC(R) and CD(R).

A cache miss signal occurs if a CP(I) requested DW is not identified in its PD(I), i.e. not in PD(I) or in a synonym entry in PD(I), or is identified with a RO designation when the CP(I) is requesting a storage write access. In response to any cache miss signal the CP(I) cache controls in its BCE(I) request a fetch of the line containing the requested data, and a cross-interrogation (XI) of the directory CD(I) to check for synonyms and of all other directories CD(R) in the MP to check for conflicts to assure that the requesting SIC(I) will receive the latest version of that line, and invalidate an exclusively obtained line when it is held in any SIC(R). The XI operation searches the copy directories CD's of all CP's to determine if any CP cache has the line (i.e. a cache conflict).

Virtual address bits from the IE logical address are used to address the cache directories; and they only address the principle cache class and they do not address any synonym class in PD or CD. Then each potential synonym class must be searched for the absolute address translated from the CP request in order to detect the existence of any synonym line.

Cross-interrogation and synonym searching are not done in the PD's, so that no PD cycles are stolen for XI or synonym detection purposes, and therefore the XI and synonym detection burden is placed on the CD's. Synonym searching is done in CD(I), and conflict searching is done in each CD(R). Any PD(R) is only accessed after a conflict is detected in its CD(R) and PD(R) must be changed. PD(I) is accessed only for a synonym found in CD(I) to be exclusively designated, and a readonly synonym is not accessed but its line is fetched into its principle class, which is then accessed. Most XI and synonym searches will not cause any change in the associated PD(R), since only a small percentage of XIs will find any conflict or synonym (e.g. less than 5%).

Thus, if cross-interrogation for a CP fetch request finds the line in another CD(R) (i.e. a line conflict), its shareability designation is checked in the remote CD(R). If an RO designation is found, no further action is required for the other CD(R). But if an EX designation is found for the conflicting line, the SC controls for that conflicting CD(R) must generate an ARO (alter to readonly) command to its corresponding PD(R). Then the BCE(R) with the corresponding PD(R) tests the state of a line change (CH) tag bit in combination with the EX state to determine the final designation for the conflicting line subject to the fetch request. If the CH bit indicates no change, PD(R) changes the EX bit to RO state and issues a CERO (change entry to readonly) command to its associated CD(R) to do likewise. But, if the CH bit indicates the line was changed, the BCE sets the V (valid) bit to invalidate state in the PD(R), initiates a castout (CO) of the line from the associated SIC, and issues a castout (CO) command to the SC which causes the conflicting entry in the corresponding CD(R) to have the V bit set to invalidate state.

A CP(I) store interrogate (SI) command initiated the XI. If a conflicting line is found in any CD(R), the SC having the conflicting CD(R) issues an invalidate (INV) command to its associated PD(R) to invalidate the conflicting line when a readonly conflict is detected. If an exlusive conflict is detected, a CD command is issued which causes the PD(R) to test its CH bit, and to issue an ILE command to the CD(R) if the line is held RO or EX and was not changed, but to issue a CO command to the CD(R) if the line is held exlusive and was changed.

If an I/O channel or service processor (SVP) initiated a fetch or store request to main storage, each CD(R) must be cross-interrogated for the address of the request to determine if its SIC has conflicting data. If a conflict is found in a CD(R) holding the data exclusively or holding it RO when there is an I/O or SVP store or fetch request, the CD(R) communicates with its PD(R) and the line is invalidated if unchanged, or castout and invalidated if changed.

All possible request types, initial and final line shareability designations, pertinent commands between each associated CD and PD pair for a CPU having a conflicting line, and the effect of the CH bit in the PD are summarized in the following Table 1:

7

TABLE 1

| Issuing CP(I) (with cache miss) | | CP(R) (with conflict) | | | | | |
| Request type | New line desig. | Old line desig. | | SC CMD to BCE | BCE(R) CMD to SC(R) | | CD(R) to CD(I) SIG |
| | | Initial | Final | | data changed (CH ON) | data unchanged (CH OFF) | |
|---|---|---|---|---|---|---|---|
| CP Read Only (RO) Fetch | RO | RO | RO | — | — | — | — |
| | RO | EX | INVAL | ARO | CO | — | — |
| | RO | EX | RO | ARO | — | CERO | — |
| CP Exclu-sive (EX) Fetch | RO | RO | RO | — | — | — | ATRO |
| | EX | EX | INVAL | ARO | CO | — | — |
| | RO | EX | RO | ARO | — | CERO | ATRO |
| CP Store Interro-gate (SI) | EX | RO | INVAL | INV | — | ILE | |
| | EX | EX | INVAL | CO | CO | — | |
| | EX | EX | INVAL | CO | — | ILE | |
| I/O or SVP Fetch | | RO | RO | — | — | — | |
| | | EX | INVAL | CO | CO | — | |
| | | EX | INVAL | CO | — | ILE | |
| I/O or SVP Store | | RO | INVAL | INV | — | ILE | |
| | | EX | INVAL | CO | CO | — | |
| | | EX | INVAL | CO | — | ILE | |

Invalidate Line Entry (ILE):
BCE(R) sends an ILE command to the CD(R) controls to invalidate the specified directory line entry in the CD(R).

Cast Out (CO)
BCE(R) transfers the line having the request address from SIC(R) to MS through a line store buffer (LSB) in BCE(R), which causes the CD(R) entry to be invalidated upon the successful completion of the store operation.

Alter to Readonly (ARO)
SC command asking BCE(R) to test the CH bit in PD(R) and make an appropriate command to CD(R), i.e. a CERO or CO command.

Change Entry to Readonly (CERO)
BCE(R) command asking SC(R) to change the EX bit in CD(R) to its RO state.

Alter to Readonly (ATRO)
SC control signal from CD(R) to CD(I) to alter EX bit in issuing PD(I) to RO state.
To assure the integrity of the XI operation, all copy directories in the MP are searched simultaneously. Therefore all CDs in the MP are examined for a line address which matches the line address in each CPU miss request in the MP. Each CD search operation also detects the presence of any match in all synonym classes for the requested line in every CD. If no CD match is found during the search operation, the line fetch request due to the cache miss is immediately accessed in MS. If a match is detected for an exclusive synonym in CD(I), the line fetch request is cancelled and the IE access is made in the synonym location in SIC(I). If a match is detected for either the request address (i.e. in the principle class), or a synonym class in CD(R), a conflict signal is provided to CD(I), and any required castout(s) are made from SIC(I) and/or SIC(R) to MS before the line fetch is made to SIC(I). A detected readonly synonym in CD(I) is also handled like a conflict in that a line fetch is then made in MS. Any line fetch request with a CD detected conflict is held in an SC command queue, from which the line fetch request is reissued to MS after any castout line is

8

completely removed from the cache into a line store buffer. The command queues and their SC controls are described and claimed in U.S.A patent 4 136 386 filed October 6, 1977 by E. J. Annunziata.

The SC connects between MS and the BCEs and the I/O channels by using 72 line bidirectional busses (64 data/command lines plus 8 ECC lines) to provide a doubleword parallel transfer for both the commands are transmitted.

The different synonym and non-synonym detection conditions in CD(I) for a BCE(I) miss command are represented in the following Table 2, in which the acronym meanings are in parethesis: CMD (Command), LF (Line Fetch), Syno (Synonym), Desig (Designation, # (Number of Copies of the Requested Line), Inval (Invalidation), OP (Operations), CP Acc (Processor Accesses), Princ (Principle), and FTH (fetch request state of the SI bit):

TABLE 2

| BCE Miss CMD (for LF) | | Initial CD(I) Syno desig. | Resulting action for CP(I) | | | |
|---|---|---|---|---|---|---|
| EX | SI | | # in SIC(I) | Syno inval. in SIC(I) | OP | CP(I)Acc. |
| RO | FTH | RO | 2 RO | No | MS LF to SIC(I) | Princ |
| RO | FTH | EX | 1 EX | No | Syno addr from CD(I) to PD(I) & no LF | Syno |
| EX | FTH | RO | 2 RO | No | MS LF to SIC(I) | Princ |
| EX | FTH | EX | 1 EX | No | Syno Addr from CD(I) to PD(I) & no LF | Syno |
| EX | SI | RO | 1 EX | Yes | MS LF to SIC(I) | Princ |
| EX | SI | EX | 1 EX | No | Syno Addr from CD(I) to PD(I) & no LF | Syno |
| RO | FTH | No Syno | 1 RO | No Syno | MS LF to SIC(I) | Princ |
| EX | FTH | No Syno | 1 EX | No Syno | MS LF to SIC(I) | Princ |
| EX | SI | No Syno | 1 EX | No | MS LF to SIC(I) | Princ |

A BCE(I) miss command for a line fetch causes SC(I) to search CD(I) for synonyms at the same time and in the same CD classes that each CD(R) is searching for conflicts in its principle and synonym locations for the same BCE(I) miss command. The BCE(I) miss command bit positions EX and SI shown in Figure 3B exercise control over how SC(I) handles any synonym which might be found in CD(I), as well as the setting of the EX bit in a found synonym entry in CD(I). The output compare circuits for CD(I) detect the existence of any synonym in CD(I). An exclusively designated synonym entry is detected by an EX compare (CMPR) signal, and a readonly designated synonym entry is detected by a RO compare signal.

When any central processor fetch or store (SI) request detects an EX synonym in CD(I), the synonym class entry is determined by SC(I) and its address is transmitted to PD(I) to enable the processor to access the requested data in the synonym location in SIC(I).

But when any processor fetch or store request finds a RO synonym entry, the request does not access the RO synonym line in SIC(I), but instead accesses a new entry put into the principle class in PD(I) and CD(I)

9

for a line fetch into the principle class in SIC(I). Then the processor thereafter accesses the data in the principle class.

Although an RO synonym line is not accessed by an RO fetch request; nevertheless the RO synonym is left valid in SIC(I) with the result that two copies of the line then exist in SIC(I).

Also, an RO synonym is not accessed by a SI (store) request; but since SI requests are always exclusive, duplicate entries are not permitted. That is, only one EX entry can be provided for a given line in all caches in the MP at any one time. Therefore, the line fetch is made to a location in the principle class where its entry is set to exclusive state, and the RO synonym entry is invalidated.

Hence the result of an RO fetch request is that it ignores an RO synonym and causes the synonym line to be effectively copied into the principle location in SIC(I). Thereafter, subsequent IE requests to the principle address will find the data in the princple cache location and not generate any cache miss, thereby avoiding cache misses and their line fetch and the cross-interrogation overhead which would significantly increase access time for subsequent requests to the same line. On the average, this overhead saved for subsequent accesses to the same line outweighs the initial line fetch and potential replacement overhead involved in copying the line into the principle location.

After the copy of the RO synonym line is put into the principle location in SIC(I) as a result of an IE fetch request, the RO synonym entry in CD(I), PD(I), SIC(I) remains valid and useable; and therefore the new primary location duplicates a line in the cache, and both must be set to an RO designation. The reason why this RO synonym line is not invalidated is that there is no purpose for invalidating it at this time, since it is possible for some other program to get dispatched on CP(I) for which the synonym location may be the principle location. For example, one program may detect a cache location as a synonym, while another program may detect the same location as a principle location, since the principle/synonym relationship is always relative to the requesting address, and they occur for both IE fetch and store interrogate requests.

When a SI request finds a RO synonym, it must either change the RO synonym designation to EX, or move the line as an EX entry into one of the four set locations in the principle class, since a SI request can only store into an exclusive line in SIC(I), which can not be duplicated anywhere else in this cache or any other cache. The principle entry choice is preferred with invalidation of the RO synonym, since subsequent accesses to the same line will likely occur, thereby saving the overhead of cache misses for the reasons previously discussed. Changing an RO designation to EX for any entry would also involve the XI overhead of checking all other caches and invalidating any other corresponding RO entry that might be found.

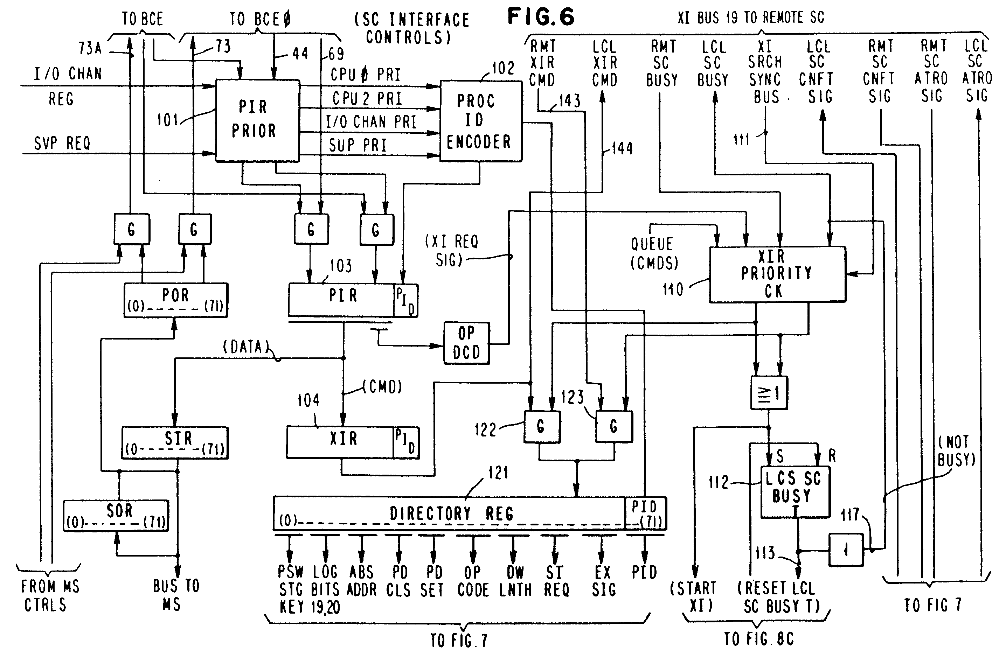

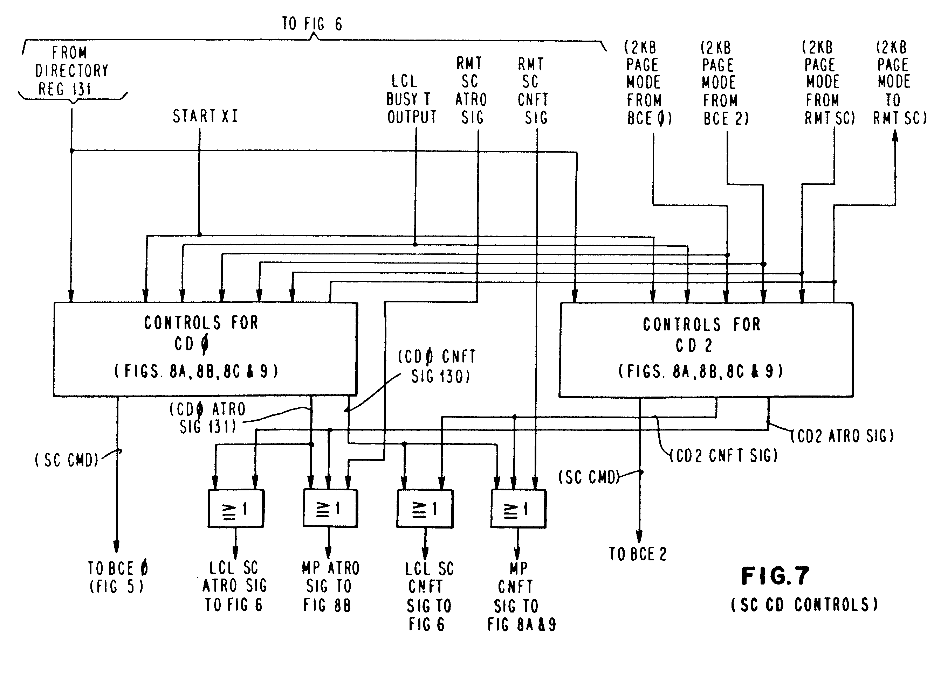

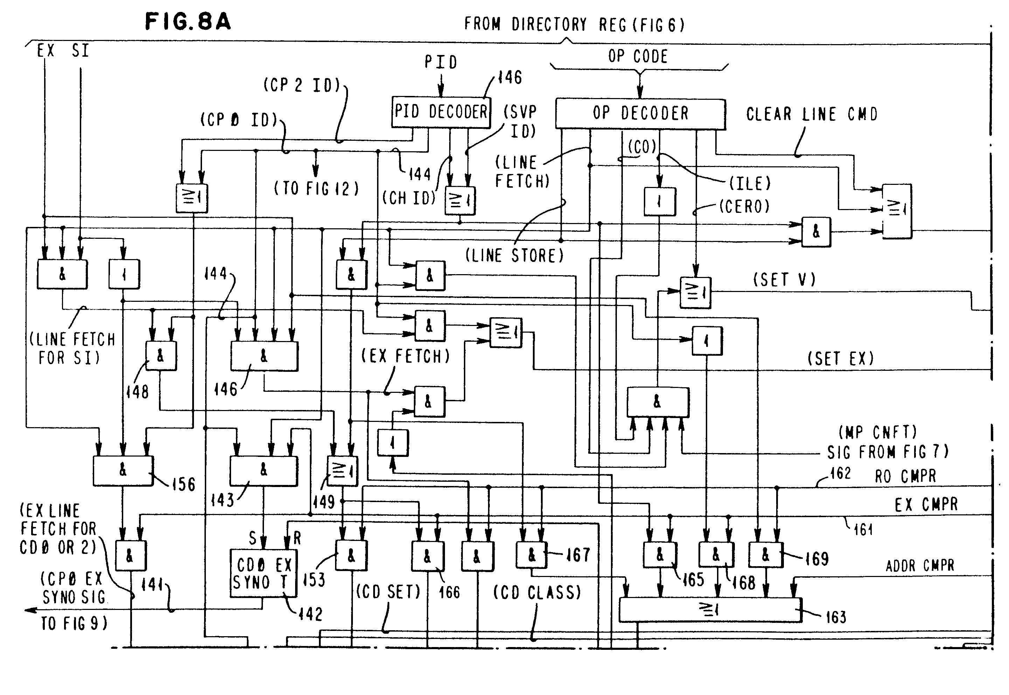

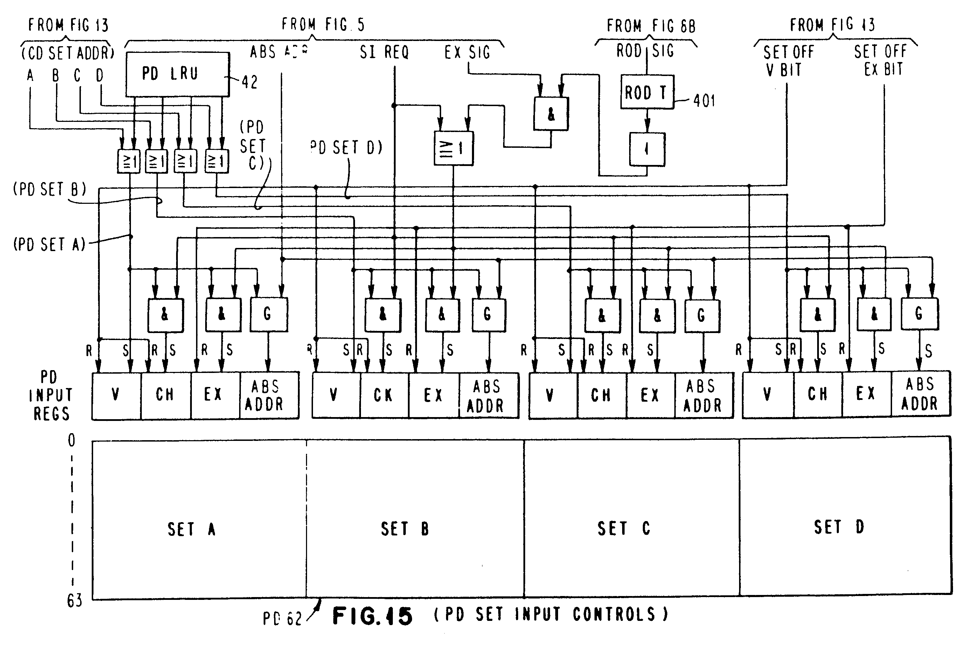

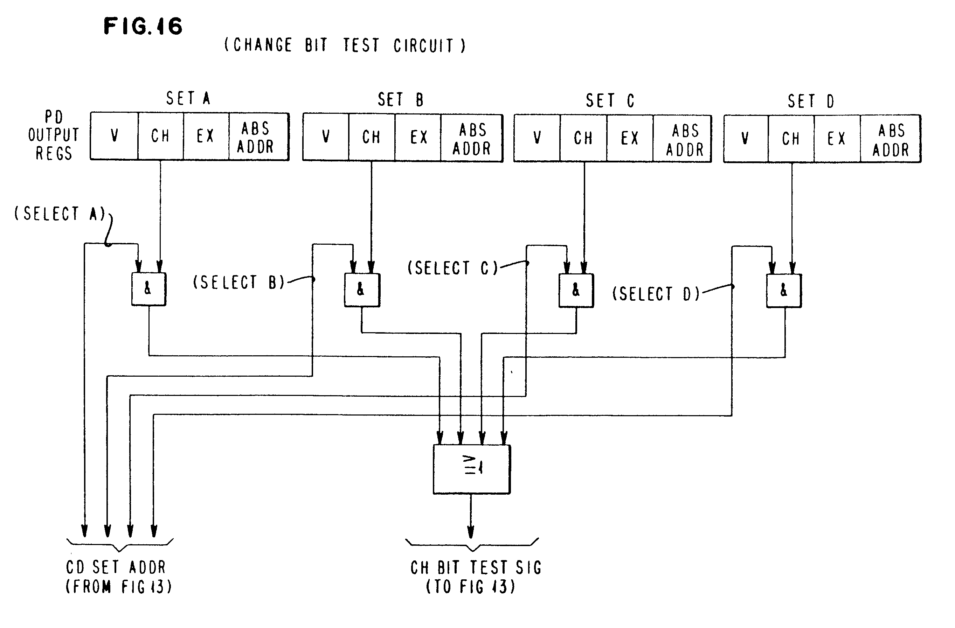

The pertinent control circuits in each BCE are shown in Figures 5, 13, 14, 15, 16 and 17. The pertinent control circuits in each system controller (SC) are shown in Figures 6, 7, 8A, 8B, 9, 10 11 and 12.

Whenever any central processor (CP) must either fetch or store a doubleword (DW) of data, the instruction execution unit (IE) in the CP issues an IE command to the buffer control unit (BCE) in the CP shown in Figure 5. The information in the IE command is shown in Figure 3A which includes a storage protection key, the logical address of the request, the type of request (i.e. whether it is a fetch request or a store interrogate (SI) request), and whether the data is being requested exclusively (EX) by the CP so that it can store into the data or whether the data is requested non-exclusively (i.e. readonly so that it may be shared among a plurality of processors, none of which is presumed to write into the requested data). The SI request indicates that an IE store cache command will subsequently occur when the housekeeping (e.g. translation and/or line fetch) is completed as a result of the SI request. The subsequent IE store command contains a store cache signal, after which time the IE provides the data on the bus to be stored in the cache for that address.

Approximately 95% of the IE fetch and store requests are fully satisfied by accessing the SIC, because the data required by the command is already available in the SIC. For the remaining small percentage of the requests which miss in the cache, the request cannot be satisfied until either CD(I) reports the cache address of an exclusive synonym to PD(I), or no exclusive synonym is found in CD(I) and the line of data containing the request doubleword address is fetched from MS into the SIC of the requesting processor. Before a line fetch can be made, some important housekeeping functions must be performed. The first is to assure that there is room in the requesting SIC for the requested line. If there is no room, then the least-recently used (LRU) algorithm circuit must specify which one of four set locations in the addressed directory class is to receive the line address to be fetched, and if any changed data exists in a currently valid line address in that location, that line must be castout to a line store buffer (LSB) to make space in the SIC before the new line can be loaded into the SIC. Also, before the new line can be fetched from main storage, there must be assurance that main storage has the most recently updated version of the new line. This update test is made by cross-interrogating (XI) all CD(R)s in the MP to determine that no other SIC has a changed version of the line. An updated line possibility is indicated when any CD(R) is found to have a conflicting line; and an updated line is confirmed if a change (CH) bit in the associated processor directory PD(R) is in a set state.

An IE command to the BCE (Figure 3A) contains the logical address (i.e. virtual or real addresss) for a DW of instruction or operand data. In the BCE circuits of Figure 5, an activated SI request bit or fetch request bit in the IE command inputs to a BCE priority circuit 37 to formalize the IE request to the BCE(I). An output of circuit 37 indicates when the BCE(I) accepts the IE command.

In the BCE controls shown in Figure 5, the logical address is received from the IE command by a BCE address register 31 and is provided to conventional translation and prefixing controls 32, which provide the absolute address, which most of the time may be immediately obtained from a DLAT (dynamic look-aside address translation) array 34. If not in the DLAT, then DAT (dynamic address translation) hardware 33 is invoked to translate the address and place the translation in an entry in DLAT 34. The translated absolute address of the request is put into an absolute address register 36.

Simultaneously with the DLAT operation, the BCE address register 31 outputs six bit positions 19—24 of the logical address as a class address to PD class addressing controls 41 to select a PD class entry in PD 62 containing four set-associative line entries. The choice of bits 19—24 selects one of 64 classes in the cache. The output of abolute address register 36 is then provided to conventional set-associative comparators in PD 62 to select any line entry in the selected class that matches the absolute address. Figure 17 shows this comparator circuitry in detail. If no match is obtained, a no select output is activated which provides a cache miss signal. If a match is obtained, data exists in SIC 63 at a line location associated with the matched entry in PD, and the requested DW is accessed in this line.

If a cache miss occurs, it activates an LRU circuit 42 to choose the least recently used entry (i.e. set A, B, C or D) in the same PD class for receiving the tags for the line to be fetched from MS. If the valid bit is off in the selected line entry, or if the valid bit is on and the CH bit is off in this entry, it is immediately available for the new line. If the valid bit is on and the CH bit is on, then an updated line currently resides in this entry and it must be castout before the new line can be received by the SIC 63.

Whenever a cache miss occurs, a BCE miss command is generated in the BCE and sent to the SC in order to make a line fetch request to MS, and to initiate the XI operations. The miss command is shown in Figure 3B and is formed in BCE command/data register 45 which receives the absolute address of the requested data from register 31. The BCE command also receives the PD set field from LRU 42, an OP code field from OP encoder 38 which encodes the fetch or store interrogate bit in the IE command, a length field from a DW length circuit 39 which indicates the number of doublewords in a line to be fetched or stored, a SI bit field which indicates whether or not the miss command is a result of a store or fetch command from the IE, and an EX signal field which indicates whether or not the IE requested the data exclusively or readonly. The processor ID field is not transmitted by the BCE but is inserted by the SC when it receives the command, in order for the XI operation to identify the processor from which the command was received, since the XI operations use commands from a number of different processors including one or more CPs, an I/O processor and a service processor.

A BCE request trigger 43 is set by an AND circuit 47 which receives a signal from the BCE priority circuit 37 after it accepts the IE command and a miss occurs.

A PIR priority circuit 101 in the SC (see Figure 6) determines when the SC accepts a BCE command, and gates it into PIR 103 in the SC. A processor identifier (PID) encoder circuit 102 encodes the PID of the processor which had its command accepted by circuit 101, and inserts the PID into the command in PIR 103. An XIR register 104 receives the command from PIR 103 during the next machine cycle.

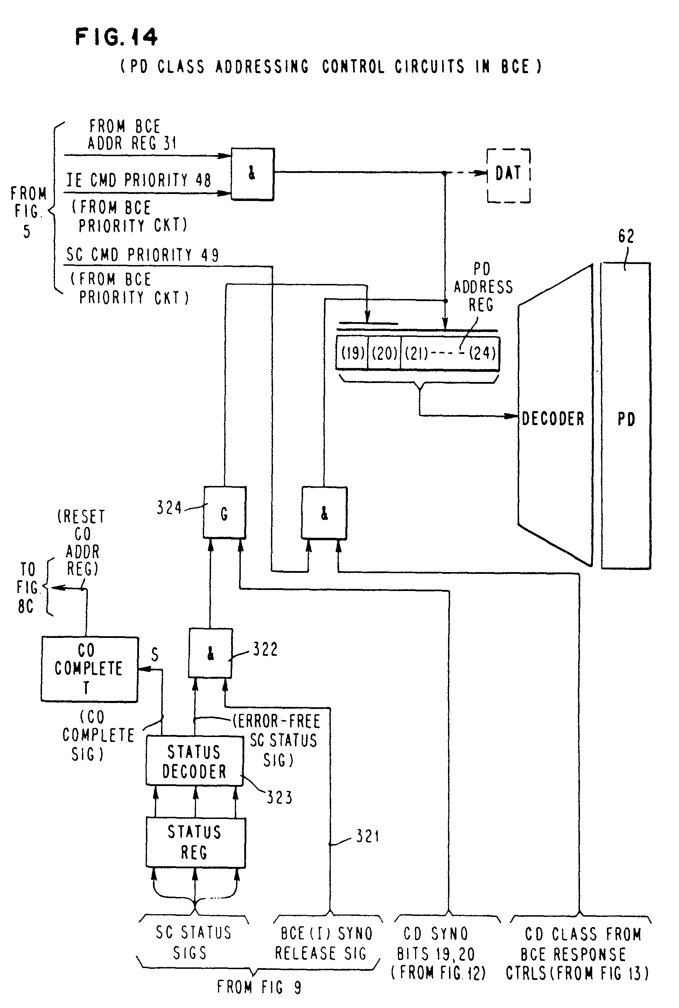

An XIR priority circuit 110 determines when the command in XIR 104 will be gated into a directory register 121 via a gate 122, from which the command signals initiate an XI operation by being provided to Figure 7 representing the controls in one SC containing CD0 and CD2. If another SC exists having CD1 and CD3, it will simultaneously receive these signals from XIR 104 on the XI bus 19 in Figure 1. This initiates a simultaneous search of all copy directories in all SCs (whether the MP has only a single SC or plural SCs). The XI search sync lines 111 in bus 19 in Figure 9 connect between plural SCs to synchronize all CD searches in the same machine cycles. The search is for the absolute address of the line currently in each directory register 121.

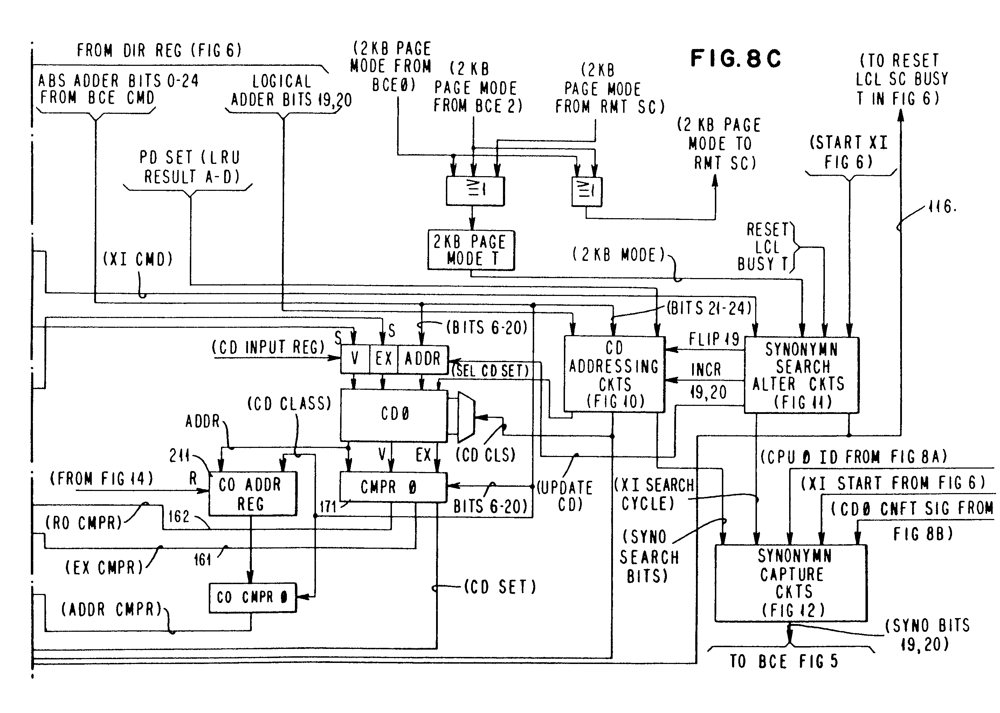

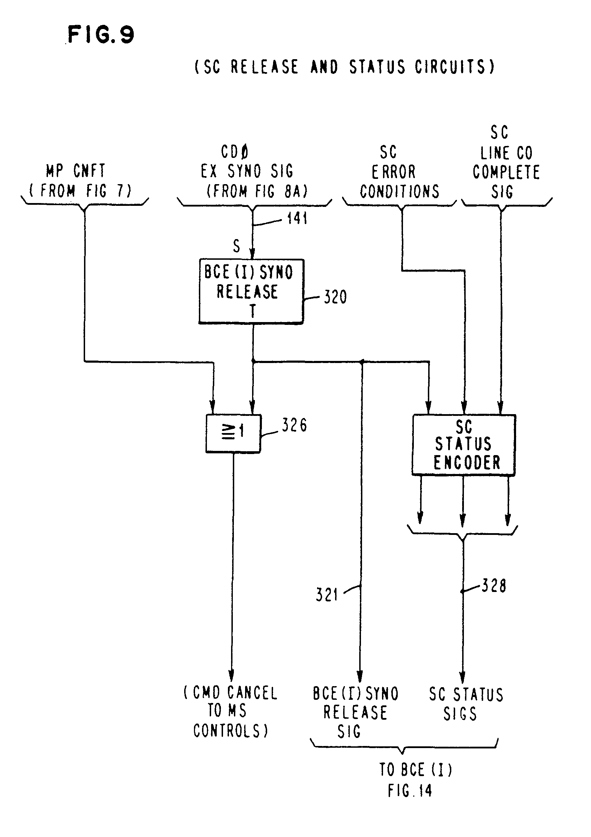

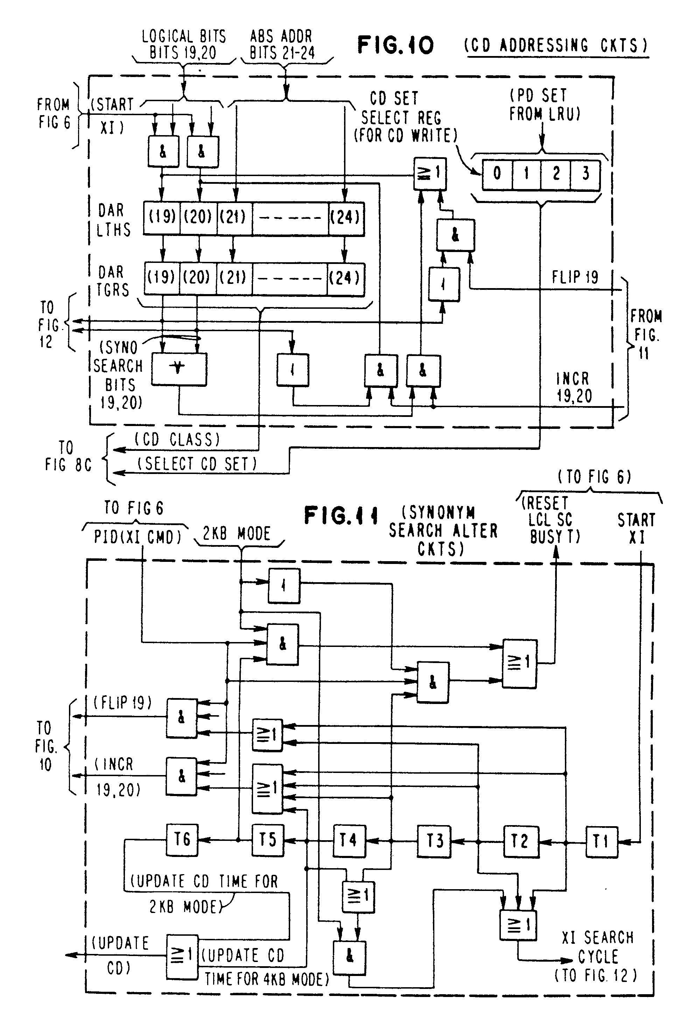

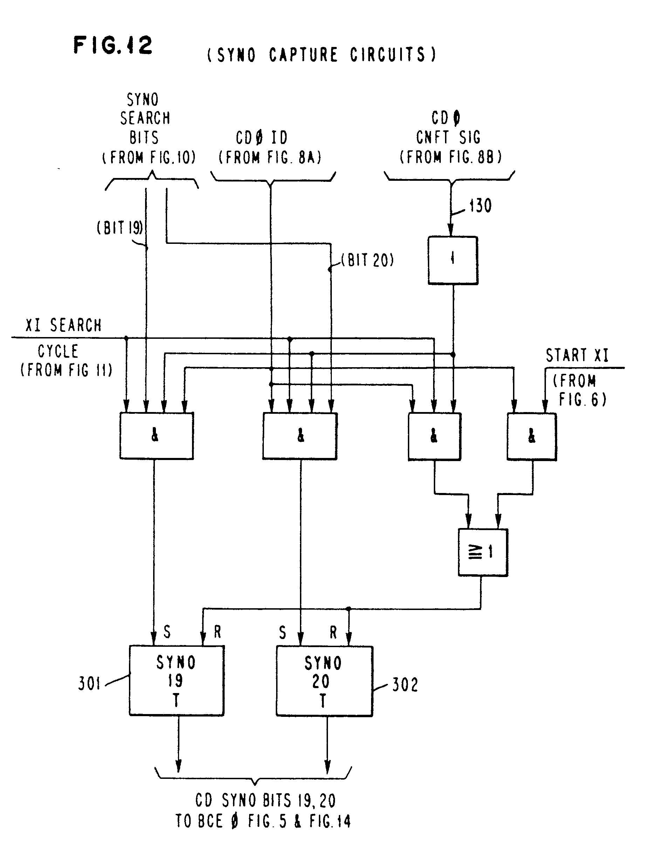

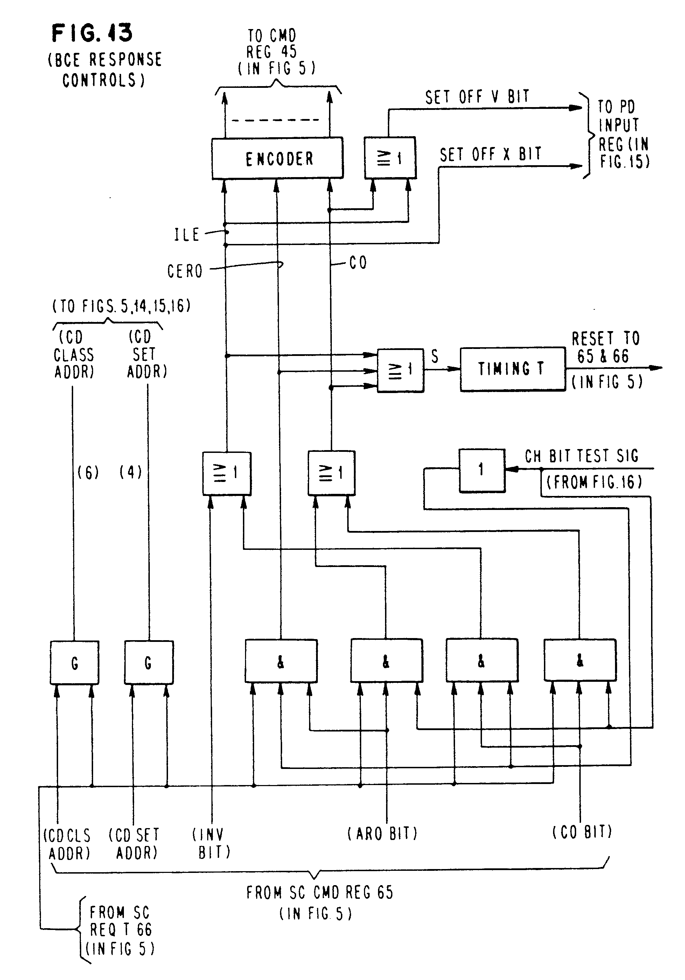

Whenever activated, an output of circuit 110 sets a local SC busy trigger 112. If any CD finds the searched address, it generates a conflict signal on line 130 for CD0 in Figure 8B (or a corresponding line 130 for any other CD). Figures 8A, 8B and 8C show SC circuits for generating the CD0 conflict signal 130 from a CD0 conflict trigger 137.

Normally, a conflict can only be found in a remote CD(R). CD(I) finds a conflict when a readonly match is detected in a synonym class.

Although each CD has an entry for every line found in its corresponding PD, the CD need not have all of the information found in its corresponding PD. This embodiment only requires that each CD have the tag information shown in Figure 2B which includes the valid (V) and exclusive (EX) bits and high-order absolute address bits 8—20 for each represented line. The tag entries found in each PD line entry are shown in Figure 2A. Each PD line entry additionally contains a protect key, a fetch (F) protect bit, and a page change (PG CH) bit. An additional tag bit in the PD is the LN CH bit, which hereafter is referred to as the CH bit which indicates whether or not the corresponding line is changed in the associated SIC.

The manner in which the CD is updated is controlled by the circuits shown in Figure 8A, which controls the inputs to the CD input register in Figure 8C that inserts or modifies the entries into the CD array.

In general, each IE sends fetch and store requests to its associated BCE. Store (SI) requests are always requested exclusively. Instruction fetch requests are requested readonly. Operand fetch requests are requested exclusively. Under special circumstances, the EX tag bit for a required line is set to RO state in spite of an exclusive operand fetch request by the IE. If an operand fetch is requested exclusively by IE(I), and PD(I) finds the EX bit is off (indicating the conflicting line is held readonly), then the access is permitted in SIC(I), and no cache miss results and no XI operation occurs for the fetch request.

If an IE(I) operand fetch request does not find the address in the principle class in PD(I), a cache miss results and an XI operation is caused in all CD. Whenever a CD finds a conflicting address for a XIed fetch exclusive request command, the SC for that CD must examine its EX tag bit state. If the EX bit for the conflicting line is set to RO state, CD will cause an ATRO (alter to readonly) signal to be transmitted to the SC for CD(I) so that it will communicate with PD(I) to change the EX bit state to read-only, since that EX bit was initially set to EX state by the IE request. But if CD(R) finds its EX bit set to EX state, for the XIed fetch exclusive request command, the SC for CD(R) will transmit an ARO command (as shown in Figure 3C) to PD(R). The SC command includes the class and set addresses in CD(R) indicating where the conflicting entry was found, and the command contains a castout (CO) command bit, an invalidate (INV) bit, and an alter-to-readonly (ARO) bit the respective line in PD(R). The ARO bit is set to make it an ARO command. However, if CD(I) finds the EX bit set to EX state for a conflict address, CD(I) sends an EX synonym signal to PD(I) to access the synonym location in SIC(I), as shown in Figures 8A, 9, 12 and 14.

The different types of SC commands (if any) generated for the different situations are indicated in Table 1 herein and depend on the IE request type, the issuing PID, and the setting of the EX bit for any conflicting entry found in a CD(R).

When the SC command is received by BCE(R), the command response provided by BCE(R) is shown in Figure 3D, and is determined as indicated in Table 1 herein which shows how the BCE command is dependent on the state of the change (CH) tag bit for the line in PD(R). In regard to this invention, the specific command response is dependent upon the command request type, its PID and EX bit state.

If a conflict is found in any CD, the BCE(I) miss command execution is suspended and this command is held in the SC command queue (not shown), until BCE(R) responds to the CD(R) command requesting ILE, CO or CERO.

If BCE(R) receives an ARO command and the CH bit is on in PD(R) for the conflicting line, a castout is required from SIC(R), and the castout begins as soon as PD(R) accepts an SC ARO command and finds the CH bit is on for the conflicting line. The BCE responds with a castout (CO) command to the SC which sets the V bit off for the entry in CD(R). If CH is off, the line is unchanged and BCE(R) will reset its EX bit to RO state and issue a CERO (change entry to readonly) command to the corresponding CD(R), in order for the CD(R) to set its corresponding EX bit to RO state for the line. The CERO command will cause the BCE(I) miss command to be taken from the SC command queue and again XI searched.

In response to the CERO command, CD(R) changes its EX bit to RO state. Then the next iteration of the BCE(I) miss command processing will find a RO state in the CD(R) entry, which will cause an ATRO signal to the SC for CD(I) to set the EX bit for the line to RO state. The hardware for this operation is shown in Figures 5, 7, 8A, 8B and 8C. Whenever the ATRO signal is received by the issuing CD(I), it generates a ROD (readonly designation) signal which it sends to its corresponding PD(I) to reset its EX bit for that line to the RO state, in order to indicate that the line will thereafter be held in RO state in the issuing processor SIC(I) as well as being in the RO state in each SIC(R) finding the conflict.

All storage commands are handled through several phases of sequencing control in the SC; and at any instant of time, several different phases of different storage commands may be processed concurrently in the SC.

The normal sequencing of BCE fetch and store commands includes the following described operations.

During the same time as the XI operation is being done, the command is also having its PSW storage key checked in the SC for possible key violations, as disclosed and claimed in prior cited application EP 80 103 081 (EP—A—0 021 144).

Also the SC checks for the availability of the BSM and its controller required by the address in the command, as disclosed and claimed in prior cited application EP 79 105 164 (EP—A—0 012 951). If the BSM is not busy, the MS command is sent to the BSM immediately. On the other hand, if the BSM is found to be busy and/or a conflict is found, the command is saved in the SC command queue and the queue array, to be reissued when the BSM becomes available and/or the conflict is resolved. Each time an XI operation iteration is completed, the status for the MS command is again updated in the command queue.

After the BSM controller (BSC) of the required BSM receives the MS command from the SC, the BSC may or may not start the storage access immediately (depending on whether there is a previous storage access in progress). The BSC will signal the SC when a data ready condition exists.

Because of the long memory access time relative to the CP cycle time, by the time the BSC signals data ready, the SC has normally completed all status checking related to the MS command. If directory conflicts or key violations are detected, the MS data transfer phase of the operation is cancelled, and may subsequently be reissued after the conflicting conditions are resolved. However, with most MS commands, no conflict or violation is detected; therefore, the data transfer takes place immediately after the SC has checked that both MS and CPU data transfer paths are not busy.

From zero to three lines of main storage access occur as a result of each BCE miss command. Except for an EX synonym, the BCE miss command requires a line fetch from MS to SIC(I). A cache miss may also require a line castout from SIC(I) in the issuing processor to make room for the required line fetch if the LRU selected location is occupied by a valid changed line. If the XI operation flinds the requested line was updated in any SIC(R), the line must be cast out of SIC(R) before it can be line fetched by SIC(I).

The three phases of control described above, namely, BCE command processing, MS access control, and the data transfer, are all independently handled in the SC. The control of each phase can begin processing a new command in that phase as soon as the phase has finished processing the previous command. Therefore, several different commands can be processed concurrently in the SC by its different phase controls.

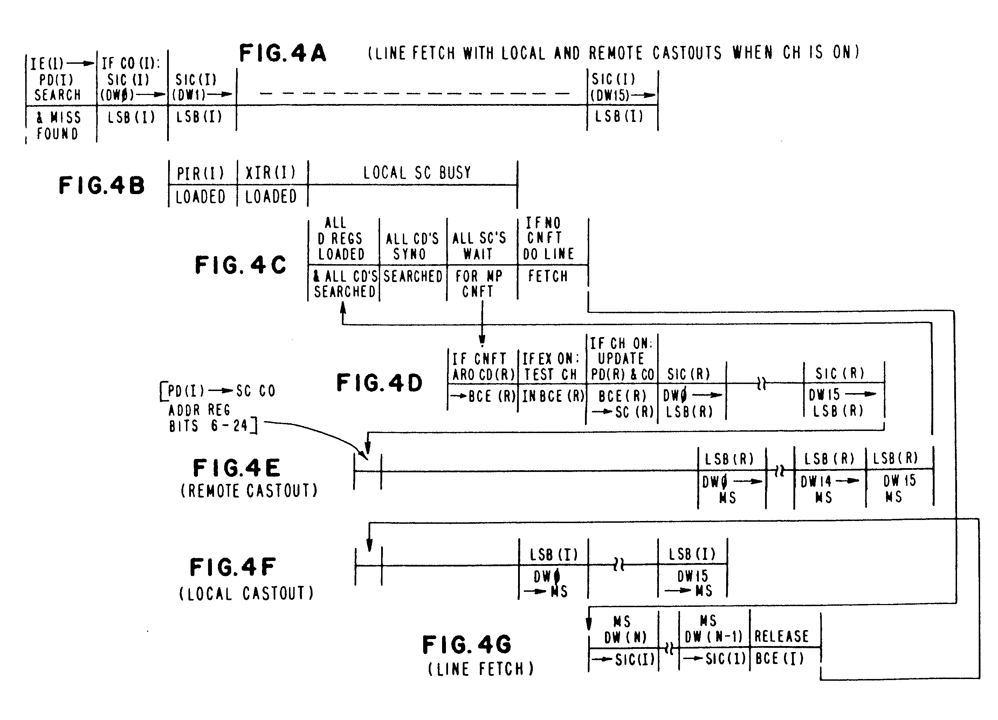

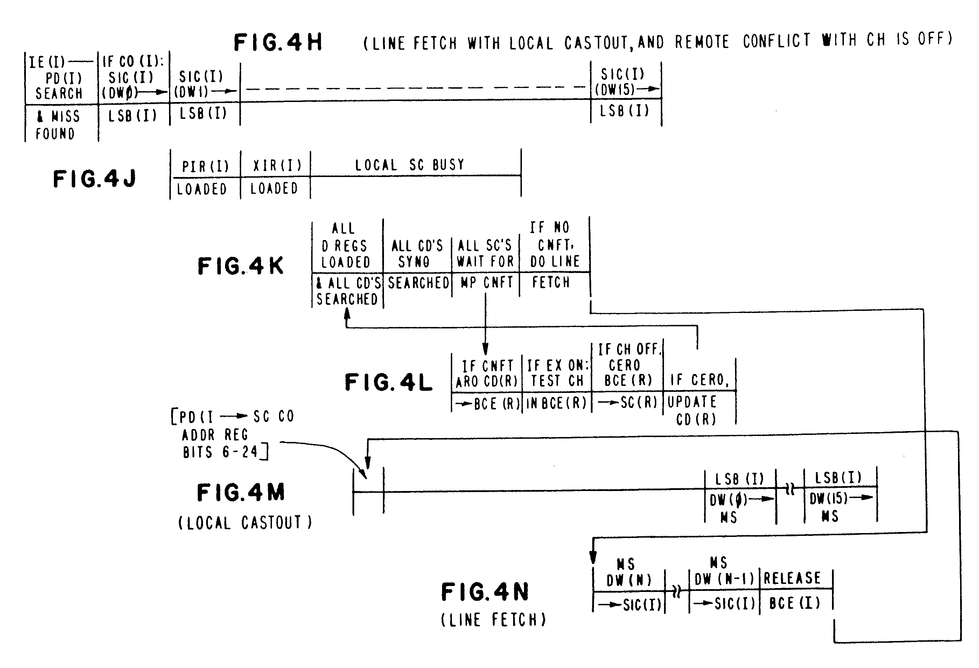

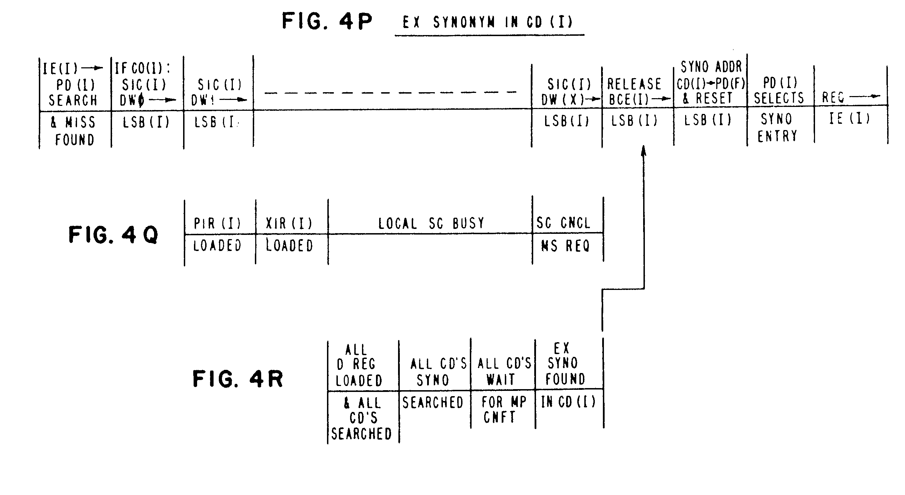

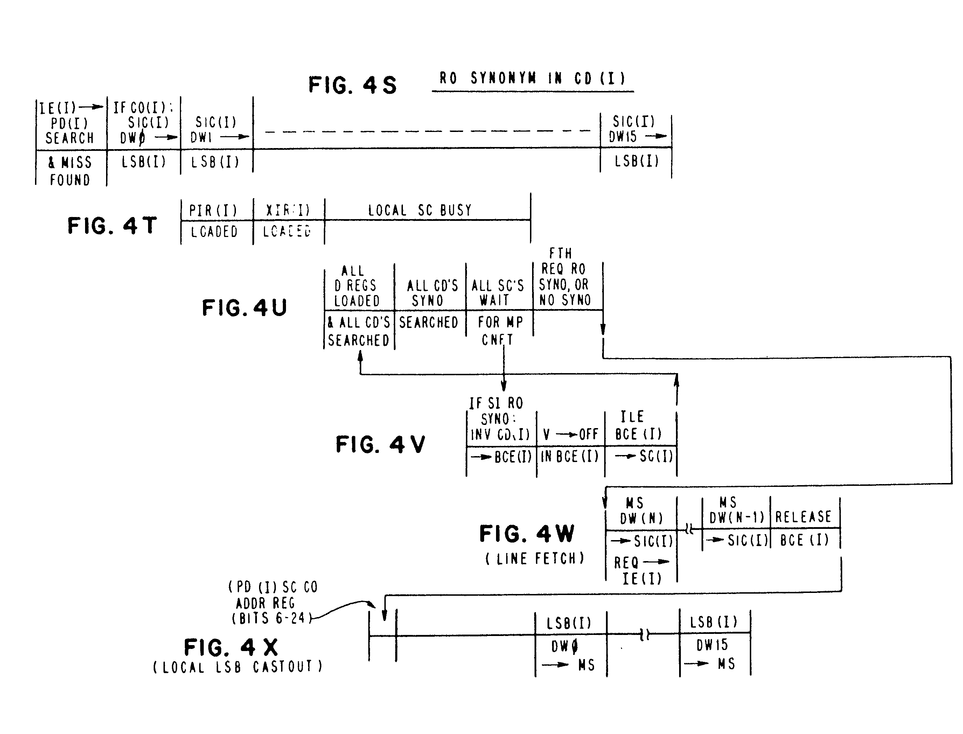

Figures 4A through 4F illustrate timing sequences for a BCE miss request having an XI conflict with the CH bit on and requiring two line castouts from SIC(I) and SIC(R) prior to the line fetch. Figures 4H through 4N illustrate timing sequences for a BCE miss request requiring only a castout by the issuing processor SIC(I) prior to the line fetch.

Figure 4A illustrates a cache miss followed by the castout of the sixteen DWs of a valid changed line in SIC(I) to its LSB(I) to make room in SIC(I) for a requested line fetch. The castout uses a line store buffer (LSB) 51 shown in Figure 5 in order to free up SIC(I) before the castout line in LSB is stored into MS, which otherwise would delay the line fetch, so that the line may be made available to CP(I) much earlier than if its DWs were directly transferred from SIC to MS. Thus in the first cycle shown in Figure 4A, PD(I) is searched and the miss is found at that time, the BCE miss command is sent to the SC, the LRU 42 selects the SIC location to receive the line fetch but it is currently occupied by another valid changed line. Then the occupying line is castout of SIC(I) during the succeeding sixteen cycles to respectively empty the sixteen doublewords from SIC 63 into the LSB 51 (Figure 5) with the timing shown in Figure 4A as DW0 through DW15 are transferred from SIC(I) to LSB(I) for the initiating CP. As soon as the last DW15 of the SIC(I) to LSB(I) is completed, SIC(I) is able to receive the line fetch, which can begin if the XI operations are completed.

In Figure 4B simultaneously with the SIC(I) castout, the SC receives the BCE miss command in its PIR(I) 103 (the circuits are shown in Figure 6) two cycles after the BCE received its request from IE(I). On the next cycle, the command is received by XIR(I) 104. When XIR priority is given by circuit 110 on the following cycles, the command is transferred by gate 122 into directory register 121 in the local SC(I), and simultaneously via the XI bus to gate 123 into directory register 121 in each remote SC(R), if any.

Then in Figure 4C during plural cycles all CDs in the MP are searched for the BCE command address in the principle class and its synonym classes, one cycle per class being searched. Then all SCs wait for a cycle during which they receive any MP conflict signal resulting from the searches. If an address conflict is found in any CD(R), and if the EX bit is on for the line, its SC sends an ARO command from register 201 in Figure 8B to register 65 in Figure 5 in its BCE(R), as shown by the first cycle in Figure 4D. In the next cycle, the BCE(R) receiving the ARO command tests the change (CH) bit for the line in PD(R) being addressed by the ARO command.

Figure 16 shows a detailed circuit for testing the state of the CH bit in any selected PD output register.

During the next cycle in Figure 4D, if the CH bit is on (indicating the line was changed), BCE(R) sends a castout (CO) command from its command register 45 in Figure 5 to SC PIR 103.

In the third cycle in Figure 4D, PD(R) is updated by BCE(R) invalidating the entry, and simultaneously issues a CO command to SC(R). Then the SC loads its CO register 211 in Figure 8C, and CD(R) is updated by its SC invalidating the entry. Then during the fourth cycle in Figure 4D the castout begins by moving DW0 of the addressed line in SIC(R) to LSB(R), etc. until all sixteen DWs of the line are received in the LSB(R), after which in Figure 4E the LSB(R) provides the updated line to MS from which it is available for a line fetch to the requesting SIC(I) in Figure 4G since the XI operations in Figure 4C are most likely completed by this time. To check the completion of the XI operations, the first cycle in Figure 4C is again entered in order to begin the sequence of operations which again searches all CDs in the MP to determine if any conflict still exists, which normally should be resolved by this time. If no conflict then exists, the line fetch begins, which is shown in Figure 4G.

Thus, the line castout from SIC(R) to LSB(R) may overlap the line castout from SIC(I) to LSB(I) if both castouts are required. The requested line fetch from MS shown in Figure 4G may begin as soon as the castout of the updated line is completed to MS, which is shown in Figure 4E, i.e. LSB(R) to MS of the sixteen DWs. The line fetch begins with the requested DW(N) which is the DW at address N requested by the IE command which caused the cache miss. The line fetch of the 16 DWs may wrap around to the beginning of the line before it ends with the sixteenth DW (N−1) into SIC(I).

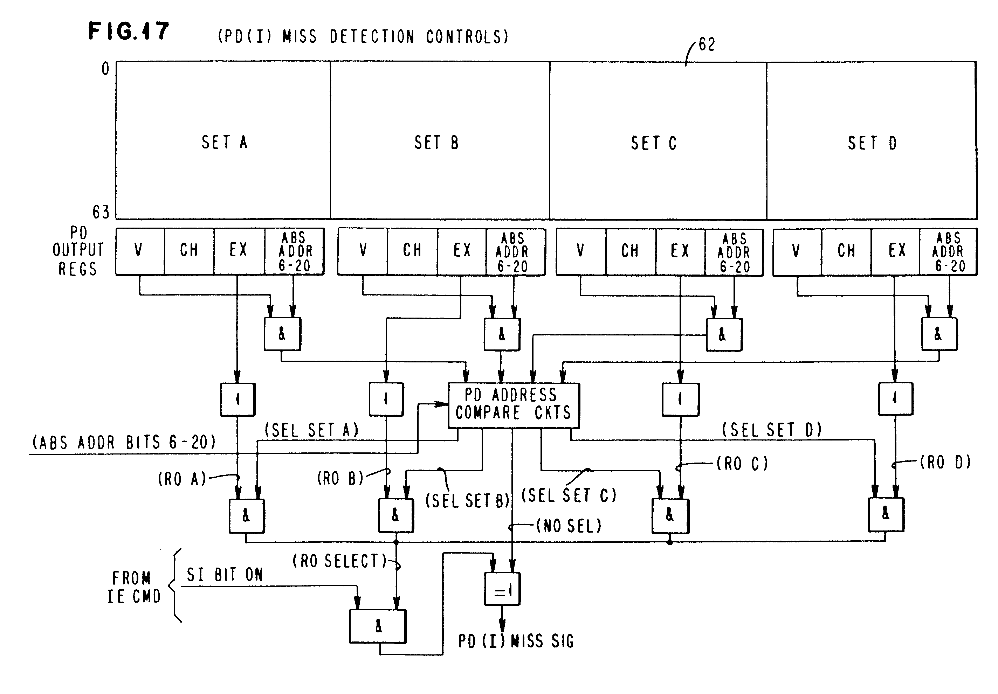

The castout transfer from any LSB to MS is controlled by the absolute address of the line in CO address register 211 in Figure 8C, which is received in the SC from the command currently in its directory register 121 in Figure 6. When the line castout to MS is complete, the SC signals a CO complete status to BCE(R) which sets its CO complete trigger in Figure 14 if all conditions indicate the CO is successful and the line is available in MS. The output of the CO complete trigger is provided to a reset input in the CO address register 211 in Figure 8C in order to make it available for a next castout transfer operation to MS.

Figures 4H—4N show an example of a remote conflict having the CH bit off (indicating the line was not changed) as shown in the third cycle in Figure 4L (corresponding to the third cycle in Figure 4D). Then BCE(R) sends a CERO command from Figure 5 to Figure 6. Figures 4H—4N show a line fetch after a one line castout. Figure 4H is identical to Figure 4A; Figure 4J is identical to Figure 4B and Figure 4K is identical to Figure 4C. Figure 4L differs from Figure 4D only in their fourth cycle, in which in Figure 4L a CERO command is issued by the BCE(R) because the CH bit was off for the line being addressed, which negates any castout from SIC(R). On the last cycle in Figure 4L, CD(R) has its EX bit updated to RO state by the CERO command, and Figure 4K is reentered to search all CDs to verify that no conflict now exists.

The SIC(I) castout operation in Figures 4H and 4M is controlled the same as previously described for Figures 4A and 4F to make room for the line fetch. Likewise the SIC(I) castout operation overlaps the

0 051 745

cross-interrogation operation in Figures 4K and 4L, and the line fetch command for MS has been provided and is waiting in the SC queue of MS requests. As soon as the SIC(I) castout is completed to LSB(I), and the final XI pass through Figure 4K finds no conflict exists, the line fetch can begin from MS to SIC(I) as shown in Figure 4N.

If no castouts are required when a BCE miss command is issued, the line fetch can begin as soon as the XI pass through Figure 4K verifies there is no existing conflict.

Figures 4C and 4K illustrate the timing for cross-interrogate operations when the MP system is operating in 4KB page mode, i.e. translation page tables address 4KB page units. In this embodiment, the MP may operate in either 4KB or 2KB page mode in which its page tables may access 4KB units or 2KB units, respectively. The significance of the page mode to the subject invention is that virtual address bits used in the cache directory class address differ between the 4KB and 2KB page modes and affect the number of synonym class addresses which must be XI searched in each 32KB SIC. For 4KB page mode, only bit 19 in the class address is a virtual address bit resulting in two class addresses to be searched. In 2KB mode, bits 19 and 20 in the class address are virtual address bits resulting in four class addresses to be searched. These virtual bits are taken from the logical address before its translation, in order to speed up the cache access time for a requesting CP to a large cache. An adverse result of using virtual bits is that the number of virtual address bits determines the number of synonym classes (as a power of 2) which must be searched in the directory; and the greater the number of virtual bits, the more synonym searching must be done in the directories.

Synonym searching is done in all copy directories (CD). In this embodiment, a separate machine cycle is used simultaneously in all CDs in the MP for searching each original and synonym class of the absolute address in the current BCE miss command. For the 4KB page mode, two cycles are needed to search all CDs for the original and the synonym class as shown in Figures 4C and 4K. In 2KB page mode, four cycles are needed to search all CDs for the original and three synonym classes. Thus, in Figures 4C and 4K showing 4KB mode, the first cycle searches the original class determined by the absolute address virtual bit 19 in the transmitted XI command. During the next cycle, bit 19 is inverted in the class address to select the only synonym class. In 2KB page mode, four cycles of searching are used in which each synonym class is obtained by a different one of four permutations of the value of virtual bits 19 and 20 to search the original and the three synonym classes in all CDs. This searching performs true synonym searching in CD(I) and conflict synonym searching in each CD(R). If a synonym match is obtained in CD(I) and the CD(I) entry is exclusive, the synonym address is transmitted by the SC to BCE(I), which then accesses the request in that synonym address in its SIC(I) and simultaneously releases the BCE miss command, cancels the MS request, and treats the situation as if no miss had occurred. These operations are performed by the circuits in Figure 9.

An EX compare is signalled on line 161 in Figures 8C and 8A for CD(I), and a RO compare is signalled on line 162 for CD(I). A RO compare signal on line 162 is handled as a conflict in CD(I) and CD(R), via OR circuit 163 in Figure 8B, and it generates an MP conflict signal in conflict trigger 137 in Figure 8C.

However, the SC ARO command, and any BCE command resulting from a synonym conflict, will contain the synonym class address instead of the original class address from the XI command being cross-interrogated.

Figures 10, 11 and 12 illustrate in detail the CD0 synonym circuits shown in block form in Figure 8C which control the synonym searching for 2KB or 4KB page mode. A start XI signal from the XIR priority circuit in Figure 6 initiates the XI search cycle generation in Figure 11. The first search cycle for all CDs is of the original class address provided in the current BCE(I) miss command from the directory register 121 in Figure 6, which occurs during the cycle of operation for trigger/latch T1 in Figure 11. If the 2KB mode signal is active to Figure 11, 2KB mode synonym searching is performed during the following cycles by T2, T3 and T4. If the 2KB mode signal is inactive to Figure 11, then 4KB mode synonym searching is performed and only the additional cycle by T2 is used for searching, which involves two less searching cycles than for the 2KB page mode.

The flip 19 and increment 19, 20 outputs from Figure 11 are provided to Figure 10 to control the permutations of bits 19 and 20 to obtain the synonym CD class addresses required for the respective CD search cycles. All four line entries in the four sets in each selected CD class are searched.

The synonym capture circuit in Figure 12 receives the current class address bits 19 and 20 from Figure 10 and also receives the associated CD conflict signal on line 130 from Figure 8B to lock the current state of class address bits 19 and 20 in syno 19 and syno 20 triggers 301 and 302, which provides their outputs to the PD class addressing control circuits in Figure 14. The remaining bits 21—24 in the class address remain as specified in the current command being searched.

Although the PD addressing control circuit in Figure 14 is duplicated in every BCE, only the BCE(I) with the issuing CP will accept a synonym address from Figure 12. This is because in Figure 14 a line 321 only provides the BCE(I) synonym release signal to identify a synonym to PD(I) which was found in CD(I). Line 321 will not be activated for any conflict (original or synonym) for any PD(R). Line 321 is controlled from a BCE(I) synonym release trigger 320 in Figure 9. Trigger 320 is set by a signal from a CD(I) exclusive synonym trigger 142 in Figure 8A, and trigger 142 is set only when the issuing BCE command in the directory register 45 has a PID which identifies CP(0) as the processor which issued the request which caused the current BCE miss being searched by all CDs. Thus trigger 142 in Figure 8A can only be set when

14

the issuing command's PID activates line 144 to an AND gate 143 when it is actuated for an exclusive synonym detected by that command.

In Figure 14, line 321 conditions an AND gate 322 which also is conditioned by an output from a status decoder 323 when it indicates an error-free status is being provided from the SC status encoder in Figure 9. Thus, line 321 will not be activated to any PD(R), because the PID for each remote CP will not then exist in the current BCE miss command being processed in every SC.

Consequently in Figure 8C, the detection of an EX compare or RO compare for a synonym class in any CD(R) is handled the same as the detection of an EX compare or RO compare in the principle class indicated in the current BCE miss command, in that any compare generates a conflict signal.

But an EX compare detected in CD(I) is handled differently, and the principle class cannot provide any compare signal in CD(I) because the lack of such compare may be responsible for the issuance of the BCE(I) miss command. When an exclusive compare is detected in CD(I), it sends a CP(I) exclusive synonym signal on line 141 in Figure 8A to set the BCE(I) syno release trigger 320 in Figure 9, which activates AND circuit 322 and gate 324 to pass the captured synonym values of bits 19, 20 into the PD address register so that the PD(I) then accesses this synonym class to find the IE requested data in SIC(I); and the MS request caused by this BCE miss command is cancelled by the output of trigger 320 through OR circuit 326 in Figure 9. The BCE(I) is thereby released from this BCE miss command and the BCE command register 45 is thereafter available to handle the next command for this BCE.

When the synonym release signal is provided by CD(I), all CD will have completed their XI searching, and no CD will have found any conflict if the synonym entry in CD(I) had its EX bit on. But if the RO bit is on in the CD(I) synonym entry, conflict(s) may be found in one or more CD(R) and invalidation is performed in this case for the CD(I) entry and any CD(R) entry as necessary for the normal XI hit rules. Table 2 shows each·cast and the resulting action taken for it.

Hence whenever the current CP request activates EX line 24 in Figure 5 for an exclusive fetch request, an AND gate 136 in Figure 8B determines that the EX tag bit for the requested line, whether in the principle or a synonym class, will be set according to the rules given in Table 1 herein. If the RO state is to exist, gate 136 provides a CD(I) ROD signal on line 137 to the ROD trigger 401 in Figure 15, which sets the EX bit to RO state in the particular PD input register for the set chosen by the PD LRU circuit associated with the issuing CP(I). The states of the V bit, CH bit and absolute address bits 6—20 for the line fetch entry into PD(I) are also controlled in Figure 15.

A conflict signal is provided whenever any remote processor CD(R) detects any principle or synonym address except for an RO synonym found for a RO processor request, or whenever the issuing processor CD(I) detects a RO synonym address in response to an SI request from the issuing processor. Remote processor CD(R) conflicts are explained using Table 1 and the previously discussed examples in Figures 4A—G and 4H—N. Issuing processor CD(I) conflicts are explained using Table 2 and the examples in Figures 4P—R and 4S—X.

In Table 1, the respective rows represent the different combinations which can exist for: the different processor request types in an XI command, and the RO and EX types for a line address found in a remote processor CD(R). The particular cases of a RO processor fetch request (or an SVP or channel processor fetch request) finding a RO line address in CD(R) is not a true conflict, because all processors can share such a RO line for RO fetch requests without any directory changes. These non-conflict situations are represented by the 1st, 4th and 10th rows in Table 1. All of the other rows in Table 1 represent conflict situations, because they require a directory change, which is done by an SC command from any remote CD(R) that finds a conflict to its respective PD(R), which is shown for all rows in Table 1 other than the 5th row.

Signalling from a remote CD(R) having a conflict to the issuing CD(I) is only required when an EX line tag bit in PD(I) is set to EX state by its processor, and it must be changed to RO state by the ATRO signal indicated in the 4th and 6th rows in Table 1.

In Table 2, the respective rows represent the different combinations which can exist for: the different processor request types represented in a BCE miss command (i.e. RO fetch, EX fetch or EX SI), and the synonym type (i.e. RO synonym or EX synonym) found in CD(I). Only the 5th row in Table 2 represents a true conflict situation, because it is the only case requiring any special directory change to an existing entry, which is done by an ILE command from CD(I) to PD(I) to change these directories. None of the other eight cases in Table 2 require any directory modification due to any SC command, although the 2nd, 4th and 6th rows represent special situations involving the transmission of a synonym address from CD(I) to PD(I) to enable the processor to access its data in the synonym line in SIC(I), and the remaining 1st, 3rd, 5th, 7th, 8th and 9th rows represent the normal execution of the BCE miss command obtaining its requested line fetch involving the insertion of a new entry in the PD(I) and CD(I) directories.

The remote CP(R) conflict cases in Table 1 are detected in Figure 8A by AND gates 166, 167, 168 and 169. All conflicts are signalled by the output of an OR circuit 164 in Figure 8A which receives the outputs of gates 166 through 169. The issuing processor CP(I) conflict case in Table 2 is also detected by AND gate 169.

In more detail, an EX synonym is detected by an EX compare (EX CMPR) signal 161 from comparator 171 in Figure 8C, and an RO synonym is detected by an RO compare (RO CMPR) signal 162 from comparator 171. Thus, gate 166 detects an EX synonym found for any SVP or channel processor request. Gate 167 detects a RO synonym found for a SVP or channel store request. Gate 168 detects an EX synonym found for any remote CP(R) request (but not for a CP(I) request). Gate 169 detects a RO synonym found for a SI request from any remote CP(R) or issuing processor CP(I).

For an issuing processor CP(I), a detected conflict indicates a synonym is found in CD(I), although most synonyms are not detected as conflicts. The synonym capture circuit in Figure 12 detects all synonyms and reports each of their class locations to PD(I).

Detected EX synonyms are handled differently from detected RO synonyms for the following reason: a statistical determination finds that system performance is improved if synonym detection is used (1) to eliminate the synonym and to copy its data into the principle location, rather than (2) accessing the requested data in the synonym location in SIC(I). It has been statistically determined that it is most likely that more requests will follow to a line found at a synonym location, and that relocating that line in the principle class will avoid generating cache misses (required for accessing the line in the synonym location), thereby eliminating such subsequent cache misses with their significant cross-interrogation and synonym checking overhead. However, this cannot be done for an EX entry locked during a checkpoint interval. (Checkpointing is defined in U.S.A. patent 3 736 566.) An EX entry may be locked, and then it cannot be invalidated or castout during a checkpoint interval. However, an RO entry is never locked during a checkpoint interval and therefore it can be then invalidated and castout, if required.

Therefore, if a RO synonym is found in CD(I), a true miss is recognized because the MS line fetch is made (see Table 2), a new entry location in SIC(I) is selected in the principle class by the LRU replacement selection circuitry (which new location will not contain a locked entry to be replaced), any valid line represented by the unlocked replacement entry is castout of SIC(I), the new SIC(I) location receives the line fetch, the new location in CD(I) and PD(I) receives the new entry which is designated either RO or EX as explained in regard to Table 1, and for a processor store request having a RO synonym found in CD(I) the synonym is invalidated due to the EX designation required for the new principle entry.

If an EX synonym is found in CD(I), a SC command specifies the EX synonym location to PD(I), which accesses the data in SIC(I), and the line fetch command to main storage is then cancelled, so that no MS line fetch is made. Thus, an EX synonym is accessed in SIC(I) instead of moving it to the principle class, because a processor deadlock may result if an attempt is made to move a locked line from the synonym class to the principle class in the cache. The deadlock occurs because a changed EX location cannot be castout while its line is locked during a checkpoint interval, and the checkpoint interval cannot be completed by the I-unit until it gets the data requested from the line fetch which cannot be obtained until after the castout (which cannot be done) is completed.

Figures 4P through 4R illustrate a timing sequence example for a BCE miss command which finds an EX synonym in CD(I). Figures 4S through 4X illustrate a timing sequence example in which a BCE miss command finds an RO synonym in CD(I).

The first cycle for the EX synonym example in Figure 4P represents a miss detection in PD(I) due to a CP(I) fetch request and the issuance of the BCE miss command. The next cycle illustrates the castout of the first DW of any valid changed line selected by the LRU for replacement in the principle class of the current request. This castout occurs into the line store buffer (LSB) in the same manner as described for Figures 4A or 4H, and begins before any synonym can be detected. If an EX synonym is subsequently detected, it will squelch the castout (but an RO synonym will not squelch the castout).

Figure 4Q begins in the manner previously described for Figure 4B in which the SC PIR(I) is loaded, then the XIR(I) is loaded while the local SC, i.e. SC(I), remains busy handling the BCE(I) miss command. In the following cycle which is the first cycle in Figure 4R, the directory registers 121 (D regs) in all SC's are loaded, and all CD's are searched in their principle class. In the next cycle in Figure 4R, the CDs are searched in their synonym class (for 4K page mode). On the third cycle, all SC's wait to determine if any conflict has been detected in CD(I) or in any CD(R) by a remote conflict signal on the XI bus as a result of such searches. If no conflict is detected in any remote CD(R) or the local CD(I), and a RO synonym is detected in the local CD(I) due to a fetch request (represented by either the 2nd or 4th row in Table 2), the fourth cycle in Figure 4R is entered. During the fourth cycle in Figure 4R, the EX synonym signal detected by trigger 142 in Figure 8A causes a BCE(I) synonym release signal on line 321 to reset the LSB(I) as shown in the reset LSB(I) cycle in Figure 4P which prevents any subsequent transfer of the castout into LSB(I), cancels the corresponding line fetch command to MS, and thereby ends execution of the BCE miss command. The EX synonym signal in Figure 8A sets the BCE(I) synonym release trigger 320 in Figure 9 which generates a command cancel signal to the main storage controls in the SC to cancel the line fetch command to main storage initiated by this BCE miss command.

Then finally in Figure 4P, the PD(I) is caused to select its EX synonym entry after the BCE(I) synonym release signal is received on line 321 in Figure 14, the CD(I) synonym address bits 19 and 20 are received from Figure 12, and the CD(I) class address bits 21—24 are contained in the current CD(I) command to the BCE(I), PD(I) controls SIC(I) to access the doubleword being requested, which is provided to IE(I) as the last cycle shown in Figure 4P. The IE request is now satisfied.

The RO synonym example in Figure 4S also begins with a BCE miss command resulting from a processor SI request. The LRU selects in the principle class in PD(I) one entry (among the four sets A—D) for replacement which is not locked and is therefore immediately available for replacement. Then LSB(I) receives a castout of any valid and changed line in the LRU selected replacement location. In this case,

**0 051 745**

LSB(I) is not reset, because an RO synonym is detected, EX synonym trigger 142 is not set when an RO synonym is detected.

The BCE miss command is received by PIR(I) in SC(I) during the first cycle in Figure 4T which begins similarly to the operation described for Figure 4Q. Also, Figure 4U begins the synonym and XI searching similarly to that described for Figure 4R. During the third cycle in Figure 4U, a conflict may or may not be detected for an RO synonym.

The fourth cycle in Figure 4U is reached if no synonym is found or if a RO synonym is found for a processor fetch request (but not for a SI request). Then no command is generated and the EX synonym trigger 142 is not set and indicates no EX synonym was found. Then the line fetch command to main storage remains active, and it begins in Figure 4W with the requested DW(N) which is provided simultaneously both to IE(I) and to SIC(I) during the first cycle in Figure 4W. The completion of the castout from the LSB to MS begins in Figure 4X as soon as the line fetch in Figure 4W is completed.

If the conflict case of an RO synonym is found for a processor SI request, then the first cycle in the sequence shown in Figure 4V is entered. In the next cycle in Figure 4V, the V bit in this RO synonym entry in PD(I) is set to invalid state. The third cycle in Figure 4V represents the issuance of an ILE command by BCE(I) to SC(I) to invalidate the corresponding RO synonym line entry found in CD(I), which ends its conflict state. Then the beginning of the sequence shown in Figure 4U is reentered, after which all of the CDs in the system are again searched, because now no conflict is found in CD(I) since the RO synonym entry which previously caused the conflict is now invalid and does not now cause any conflict signal. Therefore, the fourth cycle in Figure 4U is entered since no conflict is found, and then the line fetch in Figure 4W is initiated. Whenever the line fetch is completed, the castout line in the LSB(I) is transferred to MS as shown in Figure 4X.

In summary, the definition of a "conflict" in this detailed description is a compare-equal output from any XI compare operation for any CD that results in a SC command to the corresponding BCE for changing an existing entry in the corresponding PD, whether for a remote or issuing CP. (Thus, a RO compare for a RO processor request is not a conflict, and for the issuing processor the only conflict is a RO compare for a SI request.)

To further illustrate the operation of the invention, a number of examples are discussed, where no synonyms are assumed to exist:

Example 1
(Exclusive fetch operand request—No cache copy)

CPU(I) issues to its PD(I) a fetch address W requesting the data exclusively. The SC(I) having the copy directory, initiates a search of all copy directories (CD0, CD2 in SC0 and CD1, CD3 in SC1) in the MP to determine if any cache in the MP has the line containing address W. Finding no match in any CD, SC(I) accesses MS for the line containing address W, which is sent through SC(I) to the cache for PD(I), with the first sent data item being the requested item at address W. Both directories CD(I) and PD(I) are updated to show that the line at address W is held exclusively in the PC(I) cache.

Example 2
(Exclusive fetch operand request—Changed line in another CP)

CP(I) issues to its PD(I) a fetch address X requesting the data exclusively. The SC(I) having CD(I) obtains a search of all directories CD0—CD3 for the line having address X. Remote CD(R) finds its SIC holds the line exclusively. Then CD(R) sends a SC command (ARO) to PD(R) to test its change (CH) bit for the line having address X. The PD(R) test finds the line is held exclusive and is changed. Then PD(R) castsout (CO) that line from its cache to MS at address X, which causes both PD(R) and CD(R) to invalidate the line containing address X. Then the SC(I) having CD(I) of the issuing CP(I) fetches the line from MS at address X and sends it to the cache for CP(I). Then directories PD(I) and the CI(I) mark the line containing address X as valid, unchanged, and held exclusively in the CP(I) cache.

Example 3
(Exclusive fetch operand request—Unchanged exclusive copy in another CP)

CP(I) issues to its PD(I) a fetch address Y requesting the data exclusively. The SC(I) having the copy directory, CD(I), initiates a search of all copy directories CD0—CD3 for the line containing address Y. A line address is found in CD(R) which matches the requested line address and it is held exclusively in CD(R). Then the SC having CD(R) sends a command to its corresponding PD(R) to test the line containing address Y. PD(R) then tests the state of address Y and finds that although it is held exclusive, it is not changed. In response, PD(R) does not release the line but updates its entry for the line by resetting its exclusive bit to readonly state. Then PD(R) sends a CERO command to its corresponding CD(R) to change the line entry for address Y to readonly state. During another XI search following the CERO command, the SC having CD(R) sends an ATRO (alter to readonly) signal to the SC having CD(I) to change its exclusive tag for the requested line to readonly state. The requested data is fetched in MS at address Y and sent to the cache for PD(I) as the first item of the line, as the line is sent in its entirety from MS to the cache for PD(I). The SC fetching the line signals PD(I) to hold the line readonly.

17

Example 4
(Exclusive fetch operand request—RO copy in another CP)

CP(I) issues to its PD(I) a fetch address Z requesting the data exclusively. Then SC(I) initiates a search for the line having address Z in all directories, CD0—CD3. A match is found in CD(R) for a line that is held readonly. The SC having CD(R) sends an ATRO signal to the SC having CD(I) to change its exclusive tag for the requested line to readonly state. Then the requested line is fetched in MS and sent to the cache for PD(I), beginning with the item of data at address Z. A special signal in the SC having CD(I) is sent to PD(I) to tag the line containing address Z is being held readonly.

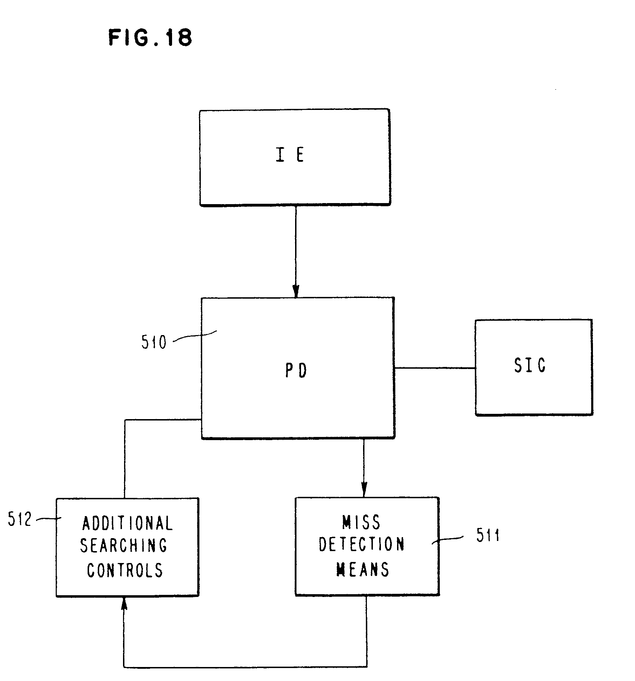

A second embodiment of the invention is shown in Figure 18. It implements the synonym processing entirely with the processor directory (PD) without using any copy directory (CD). This second embodiment includes the miss detection means shown in Figure 17, which signals the additional searching means 512 upon a cache miss to search the PD 510 for any potential synonym class in the manner described herein for searching the synonym classes in the CD by permitting the translatable bits in the class address. Controls 512 include from Figure 8C the synonym search alter circuits 212, the synonym capture circuits 213, and directory addressing circuits 211 which in Figure 18 will operate only in relation to the PD address register in Figure 14 to control the sequential selection of the synonym classes in PD510. The synonym comparisons are done in the PD address compare circuits in Figure 17, rather than in the XI compare circuit 171 with the CD in Figure 8C, which are conventional directory comparison circuits. Any synonym location detected during such synonym search is either accessed by the processor from the synonym location or is copied into the primary location in the same manner as described for the previously described first embodiment.

This second embodiment is not the preferred embodiment for an MP because it results in a degradation in processor performance due to extending the PD(I) operations and search time to include the sequential searching of each synonym class. Such single directory embodiment with each central processor in an MP reduces performance due to the additional interference of cross-interrogation. (The CD was provided to relieve the PD of the XI interference in the preferred first embodiment).

**Claims**

1. Storage hierarchy for a multiprocessor (MP) system, comprising:

a store-in-buffer cache (BCE) of set-associative organisation, for each processor (CP0, CP1,...);

a cache directory (PD) for each processor, indicating a shareability EX for cache lines that are exclusively associated to the processor and a shareability RO for cache lines that are shareable by all processors; and

cache control circuits, that are controllable by processor commands specifying a line shareability EX for store requests and operand fetch requests and a line shareability RO for instruction fetch requests, the cache control circuits setting the shareability of a new line brought into the cache of the requesting processor after a cache miss

— to EX for store (SI) processor requests;

— to RO for instruction fetch processor requests;

— to EX for operand fetch processor requests, if a remote cache contains a changed copy of the line with shareability EX, while casting out and invalidating the remote copy;

— to RO for operand fetch processor requests, if a remote cache contains an unchanged copy of the line with shareability EX, while changing the shareability of the remote copy to RO;

— to RO for operand fetch processor requests, if a remote cache contains a copy of the line with shareability RO.

2. Storage hierarchy according to claim 1, wherein the cache directories (PD) are addressed by the non-translatable part of the logical address and bits of the translatable part.

3. Storage hierarchy according to claim 2, wherein synonyms with shareability RO in the cache of the requesting processor are duplicated in that cache to be addressed by their synonym, whereas synonyms with shareability EX are accessed directly using their original address.

4. Storage hierarchy according to one of the claims 1—3, wherein the multiprocessor system comprises several system controllers (SC), each serving several processors (IE) and holding copies (CD) of the cache directories (PD) of each associated processor, wherein the cache directories (PD) and their copies (CD) are addressed by the same address bits of the virtual address, wherein all system controllers (SC) in the multiprocessor system are interconnected (XI bus) and wherein the system controllers provide circuits to search for cache synonyms and remote cache conflicts in the copy directories (CD).

5. Storage hierarchy according to claim 4, wherein upon detection of a remote cache conflict the remote system controller issues commands (ARO) to its associated cache (BCC) to test for the change bit in the cache directory (PD) and wherein the remote system controller issues commands (ATRO) to the requesting system controller when the shareability of a new line has to be changed to RO for an exclusive fetch request.

6. Storage hierarchy according to one of the claims 3—5, wherein cache synonym detection is performed by addressing the cache directory (PD) with all permutations of the bits in the translatable part of the cache address.

7. Storage hierarchy according to one of the claims 1—6, wherein a line with shareability (EX) is locked in the cache for a check point interval.

**Patentansprüche**

1. Speicherhierarchie für ein Multiprozessor-(MP) System, in der enthalten sind:

ein gruppenassoziativ organisierter Cache-Speicher (BCE) mit Direktspeicherung für jeden Prozessor (CP0, CP1,...)

ein Cache-Verzeichnis (PD) für jeden Prozessor, das eine Benutzbarkeit EX für Cache-Zellen anzeigt, die ausschließlich dem Prozessor zugeordnet sind, sowie eine Benutzbarkeit RO für Cache-Zeilen, die von allen Prozessoren gemeinsam benutzt werden können, und

Cache-Steuer-Schaltungen, die durch Prozessorbefehle steuerbar sind, welche eine Benutzbarkeit EX für Speicheranforderungen und Operanden-Abrufanforderungen, sowie eine Benutzbarkeit RO für Befehls-Abrufanforderungen anzeigen, wobei die Cache-Steuer-Schaltungen die Benutzbarkeit einer neuen, nach einem Cache-Fehltreffer in den Cache des anfordernden Prozessors gebrachten Zeile wie folgt setzen:

— auf EX für Speicher (SI)-Prozessoranforderungen;
— auf RO für Befehleabruf-Prozessoranforderungen;
— auf EX für Operandenabruf-Prozessoranforderungen, wenn ein entfernt gelegener Cache-Speicher eine geänderte Kopie der Zeile mit Benutzbarkeit EX während des Auswerfens und Entwertens der entfernt gelegenen Kopie enthält;
— auf RO für Operandenabruf-Prozessoranforderungen, wenn ein entfernt gelegener Cache-Speicher eine ungeänderte Kopie der Zeile mit Benutzbarkeit EX enthält, wobei die Benutzbarkeit der Fernkopie auf RO geändert wird;
— auf RO für Operandenabruf-Prozessoranforderungen, wenn ein entfernt gelegener Cache-Speicher eine Kopie der Zeile mit Benutzbarkeit RO enthält.

2. Speicherhierarchie nach Anspruch 1, worin die Cache-Verzeichnisse (PD) vom nicht übersetzbaren Teil der logischen Adresse und von Bits des übersetzbaren Teils adressiert werden.

3. Speicherheirarchie nach Anspruch 2, worin Synonyma mit Benutzbarkeit RO im Cache-Speicher des anfordernden Prozessors in diesem Cache-Speicher dupliziert werden, um durch ihr Synonym adressiert zu werden, während zu Synonyma mit Benutzbarkeit EX direkt unter Verwendung ihrer Originaladresse zugegriffen wird.

4. Speicherhierarchie nach einem der Ansprüche 1 bis 3, worin das Multiprozessorsystem mehrere Systemsteuereinheiten (SC) aufweist, von denen jede mehrere Prozessoren (IE) bedient und Kopien (CD) der Cache-Verzeichnisse (PD) jedes zugeordneten Prozessors enthält, worin die Cache-Verzeichnisse (PD) und ihre Kopien (CD) durch dieselben Adressbits der virtuellen Adresse adressiert werden, worin alle Systemsteuereinheiten (SC) im Multiprozessorsystem untereinander verbunden sind (XI Sammelleitung), und worin die Systemsteuereinheiten Schaltungen enthalten, mit denen in den Kopieverzeichnissen (CD) nach Cache-Synonyma und nach Konflikten in den entfernt gelegenen Cache-Speichern gesucht wird.

5. Speicherhierarchie nach Anspruch 4, worin bei Feststellen eines Konflikts in einem entfernt gelegenen Cache-Speicher die entfernt gelegene Systemsteuereinheit Befehle (ARO) an ihren zugeordneten Cache-Speicher (BCC) ausgibt, um das Änderungsbit im Cache-Verzeichnis (PD) zu prüfen, und worin die entfernt gelegene Systemsteuerinheit Befehle (ATRO) an die anfordernde Systemsteuereinheit erteilt, wenn die Benutzbarkeit einer neuen Zeile auf RO für eine exclusive Abrufanforderung verändert werden muß.

6. Speicherhierarchie nach einem der Ansprüche 3 bis 5, worin die Erkennung eines Cache-Synonyms durch das Adressieren des Cache-Verzeichnisses (PD) mit allen Permutationen der Bits im übersetzbaren Teil der Cache-Adresse vorgenommen wird.

7. Speicherhierarchie nach einem der Ansprüche 1 bis 6, worin eine Zeile mit Benutzbarkeit (EX) im Cache-Speicher während eines Prüfintervalls verriegelt wird.

**Revendications**

1. Hiérarchie de mémoires pour un système de multiprocesseurs (MP), comprenant: une antémémoire à enregistrement direct (BCE) organisée en associativité d'ensemble, pour chaque processeur (CP0, CP1,...); un répertoire d'antémémoire (PD) pour chaque processeur, indiquant une partageabilité EX pour les lignes d'antémémoire qui sont associées de façon exclusive au processeur et une partageabilité RO pour les lignes d'antémémoire qui sont partageables par tous les processeurs; et les circuits de commande d'antémémoire, qui peuvent être commandés par des instructions de processeur spécifiant une partageabilité de ligne EX, pour des demandes d'enregistrement et des demandes d'extraction d'opérande, et une partageabilité de ligne RO pour des demandes d'extraction d'instruction, les circuits de commande d'antémémoire établissant la partageabilité d'une nouvelle ligne, introduite dans l'antémémoire du processeur demandeur après un insuccès d'antémémoire,

— à EX dans le cas de demandes de processeur pour enregistrement (SI),

— à RO dans le cas de demandes de processeur pour extraction d'instruction,

— à EX dans le cas de demandes de processeur pour extraction d'opérande, si une antémémoire distante contient une copie modifiée de la ligne avec partageabilité EX, tout en transférant et invalidant la copie distante,

— à RO dans le cas de demandes de processeur pour extraction d'opérande, si une antémémoire distante contient une copie non modifiée de la ligne avec partageabilité EX, tout en changeant en RO la partageabilité de la copie distante, et

— à RO dans le cas de demandes de processeur pour extraction d'opérande, si une antémémoire distante contient une copie de la ligne avec partageabilité RO.

2. Hiérarchie de mémoires suivant la revendication 1, dans laquelle les répertoires d'antémémoire (PD) sont adressés par la partie non traduisible de l'adresse logique et par des bits de la partie traduisible.

3. Hiérarchie de mémoires suivant la revendication 2, dans laquelle les synonymes avec partageabilité RO dans l'antémémoire du processeur demandeur sont recopiés dans cette antémémoire pour être adressés par leur synonyme, tandis qu'on accède directement aux synonymes avec partageabilité EX par utilisation de leur adresse originale.

4. Hiérarchie de mémoires suivant l'une des revendications 1 à 3, dans laquelle le système de multiprocesseurs comprend plusieurs contrôleurs de système (SC), chacun desservant plusieurs processeurs (IE) et conservant des copies (CD) des répertoires d'antémémoire (PD) de chaque processeur associé, dans laquelle les répertoires d'antémémoire (PD) et leurs copies (CD) sont adressés par les mêmes bits d'adresse de l'adresse virtuelle, dans laquelle tous les contrôleurs de système (SC) dans le système de multiprocesseurs sont interconnectés (bus XI) et dans laquelle les contrôleurs de système procurent des circuits pour la recherche des synonymes d'antémémoire et des conflits d'antémémoire distante dans les répertoires de copie (CD).

5. Hiérarchie de mémoires suivant la revendication 4, dans laquelle, lors de la détection d'un conflit d'antémémoire distante, le contrôleur de système distant envoie des instructions (ARO) à son antémémoire associée (BCC) pour vérifier le bit de changement dans le répertoire d'antémémoire (PD), et dans laquelle le contrôleur de système distant envoie des instructions (ATRO) au contrôleur de système demandeur lorsque la partageabilité d'une nouvelle ligne doit être changée en RO pour une demande d'extraction exclusive.

6. Hiérarchie de mémoires suivant l'une des revendications 3 à 5, dans laquelle la détection de synonyme d'antémémoire est effectuée par adressage du répertoire d'antémémoire (PD) avec toutes les permutations des bits dans la partie traduisible de l'adresse d'antémémoire.

7. Hiérarchie de mémoires suivant l'une des revendications 1 à 6, dans laquelle une ligne avec partageabilité EX est verrouillée dans l'antémémoire pendant un intervalle de point de reprise.

## FIG. 1

## FIG. 2A  (PD ENTRY)

| PROT KEY | F PROT | LN CH | PG CH | EX | V | ///// | ABS ADDR (8)------------(20) |
|----------|--------|-------|-------|-----|-----|-------|------------------------------|
| (4 BITS) | (1 BIT) | (1 BIT) | (1 BIT) | (1 BIT) | (1 BIT) | (1 BIT) | (13 BITS) |

## FIG. 2B  (CD ENTRY)

| EX | V | ABS ADDR (8)------------(20) |
|-----|-----|------------------------------|
| (1 BIT) | (1 BIT) | (13 BITS) |

## FIG. 3A

IE CMD TO BCE

| PSW STORAGE KEY | LOGICAL ADDRESS | SI REQ | FETCH REQ | EX (RO) REQ | STORE CACHE SIG |
|---|---|---|---|---|---|
| (4 BITS) | (32 BITS) | (1 BIT) | (1 BIT) | (1 BIT) | (1 BIT) |

## FIG. 3B

BCE MISS CMD TO SC

| PSW STORAGE KEY | LOG BIT(S) 19,20 | ABS ADDR | | PD SET (LRU RESULT) | OP CODE (LINE FETCH) | DW LNTH | SI REQ | EX SIG | PROC ID |
|---|---|---|---|---|---|---|---|---|---|
| (4 BITS) | (2 BITS) | (26 BITS) | | (4 BITS) | (8 BITS) | (4 BITS) | (1 BIT) | (1 BIT) | (2 BITS) |

## FIG. 3C

SC CMDS TO BCE

| CD CLASS | CD SET | INV CMD | ARO CMD | CO CMD |
|---|---|---|---|---|
| (6 BITS) | (4 BITS) | (1 BIT) | (1 BIT) | (1 BIT) |

## FIG. 3D

BCE DIRECTORY CMDS TO SC

| PSW STORAGE KEY | LOG BITS 19,20 | ABS ADDR | PD CLASS | PD SET | OP CODE (FOR CO, ILE, OR CERO) | DW LGTH | | | PROC ID |
|---|---|---|---|---|---|---|---|---|---|
| (4 BITS) | (2 BITS) | (26 BITS) | (6 BITS) | (4 BITS) | (8 BITS) | (4 BITS) | | | (2 BITS) |

**FIG.4A** (LINE FETCH WITH LOCAL AND REMOTE CASTOUTS WHEN CH IS ON)

| IE(I) → PD(I) SEARCH & MISS FOUND | IF CO(I): SIC(I) (DWØ) → LSB(I) | SIC(I) (DW1) → LSB(I) | — — — — — — — — — — — — — — — — | SIC(I) (DW15) → LSB(I) |
|---|---|---|---|---|

**FIG.4B**

| PIR(I) LOADED | XIR(I) LOADED | LOCAL SC BUSY |
|---|---|---|

**FIG.4C**

| ALL D REGS LOADED & ALL CD'S SEARCHED | ALL CD'S SYNO SEARCHED | ALL SC'S WAIT FOR MP CNFT | IF NO CNFT DO LINE FETCH |
|---|---|---|---|

**FIG.4D**

| IF CNFT ARO CD(R) → BCE (R) | IF EX ON: TEST CH IN BCE(R) | IF CH ON: UPDATE PD(R) & CO BCE(R) → SC (R) | SIC (R) DWØ → LSB(R) | )( | SIC (R) DW15 → LSB(R) |
|---|---|---|---|---|---|

[PD(I) → SC CO ADDR REG BITS 6-24]

**FIG.4E** (REMOTE CASTOUT)

| | LSB(R) DWØ MS | )( | LSB(R) DW14 → MS | LSB(R) DW 15 MS |
|---|---|---|---|---|

**FIG.4F** (LOCAL CASTOUT)

| | LSB(I) DWØ → MS | )( | LSB(I) DW15 → MS |
|---|---|---|---|

**FIG.4G** (LINE FETCH)

| MS DW(N) → SIC(I) | )( | MS DW(N-1) → SIC(1) | RELEASE BCE(I) |
|---|---|---|---|

0 051 745

3

# FIG.4H  (LINE FETCH WITH LOCAL CASTOUT, AND REMOTE CONFLICT WITH CH IS OFF)

| IE(I)—<br>PD(I)<br>SEARCH | IF CO(I):<br>SIC(I)<br>(DWØ)— | SIC(I)<br>(DW1)— | | | SIC(I)<br>(DW15)— |
|---|---|---|---|---|---|
| & MISS<br>FOUND | LSB(I) | LSB(I) | | | LSB(I) |

**FIG.4J**

| PIR(I) | XIR(I) | LOCAL SC BUSY |
|---|---|---|
| LOADED | LOADED | |

**FIG.4K**

| ALL<br>D REGS<br>LOADED | ALL CD'S<br>SYNØ | ALL SC'S<br>WAIT FOR | IF NO<br>CNFT,<br>DO LINE |
|---|---|---|---|
| & ALL CD'S<br>SEARCHED | SEARCHED | MP CNFT | FETCH |

**FIG.4L**

| IF CNFT<br>ARO CD(R) | IF EX ON:<br>TEST CH | IF CH OFF,<br>CERO<br>BCE(R) | IF CERO, |
|---|---|---|---|
| →BCE(R) | IN BCE(R) | →SC(R) | UPDATE<br>CD(R) |

[PD(I → SC CO
ADDR REG
BITS 6-24]

**FIG.4M**

(LOCAL CASTOUT)

| | | LSB(I) | LSB(I) |
|---|---|---|---|
| | | DW(Ø)—<br>MS | DW(15)—<br>MS |

**FIG.4N**

(LINE FETCH)

| MS<br>DW(N) | MS<br>DW(N-1) | RELEASE |
|---|---|---|
| →SIC(I) | →SIC(I) | BCE(I) |

## FIG. 4P  EX SYNONYM IN CD (I)

| IE(I) → PD (1) SEARCH | IF CO(I): SIC(I) DWØ → | SIC(I) DW1 → | — — — — — — — — — — | SIC(I) DW (X) → | RELEASE BCE(I) → | SYNO ADDR CD(I)→PD(F) & RESET | PD (I) SELECTS | REG → |
|---|---|---|---|---|---|---|---|---|
| & MISS FOUND | LSB(I) | LSB(I) | | LSB(I) | LSB(I) | LSB(I) | SYNO ENTRY | IE (I) |

**FIG. 4Q**

| PIR (I) | XIR (I) | LOCAL SC BUSY | SC CNCL |
|---|---|---|---|
| LOADED | LOADED | | MS REQ |

**FIG. 4R**

| ALL D REG LOADED | ALL CD'S SYNO | ALL CD'S WAIT | EX SYNO FOUND |
|---|---|---|---|
| & ALL CD'S SEARCHED | SEARCHED | FOR MP CNFT | IN CD (I) |

0 051 745

## FIG. 4S — RO SYNONYM IN CD (I)

| IE(I) → PD(I) SEARCH | IF CO(I): SIC(I) DW0 → | SIC(I) DW1 → | – – – – – – – – – | SIC(I) DW15 → |
|---|---|---|---|---|
| & MISS FOUND | LSB(I) | LSB(I) | | LSB(I) |

## FIG. 4T

| PIR(I) | XIR(I) | LOCAL SC BUSY |
|---|---|---|
| LOADED | LOADED | |

## FIG. 4U

| ALL D REGS LOADED | ALL CD'S SYNO | ALL SC'S WAIT | FTH REQ RO SYNO, OR NO SYNO |
|---|---|---|---|
| & ALL CD'S SEARCHED | SEARCHED | FOR MP CNFT | |

## FIG. 4V

| IF SI RO SYNO: INV CD(I) | V → OFF | ILE BCE(I) |
|---|---|---|
| → BCE(I) | IN BCE(I) | → SC(I) |

## FIG. 4W (LINE FETCH)

| MS DW(N) | | MS DW(N-1) | RELEASE |
|---|---|---|---|
| → SIC(I) | | → SIC(I) | BCE(I) |
| REQ → IE(I) | | | |

## FIG. 4X (LOCAL LSB CASTOUT)

(PD (I) SC CO ADDR REG (BITS 6-24)

| | LSB(I) DW0 → MS | | LSB(I) DW15 → MS |
|---|---|---|---|

FIG. 5

(IE0 LINES TO BCE0)

0 051 745

**FIG.6**

TO BCE  TO BCEØ  (SC INTERFACE CONTROLS)  XI BUS 19 TO REMOTE SC

73A  73  44  69

I/O CHAN REG

SVP REQ

101  PIR PRIOR

CPU Ø PRI
CPU 2 PRI
I/O CHAN PRI
SUP PRI

102  PROC ID ENCODER

RMT XIR CMD  LCL XIR CMD  RMT SC BUSY  LCL SC BUSY  XI SRCH SYNC BUS  LCL SC CNFT SIG  RMT SC CNFT SIG  RMT SC ATRO SIG  LCL SC ATRO SIG

143  144  111

G  G  G  G

(XI REQ SIG)

QUEUE (CMDS)

110  XIR PRIORITY CK

POR  (0) ——— (71)

103  PIR  P$_{ID}$

OP DCD

(DATA)

(CMD)

104  XIR  P$_{ID}$

122  G  123  G

≥ 1

SIR  (0) ———— (71)

121  DIRECTORY REG  PID (71)

112  LCS SC BUSY  S  R

SOR  (0) ——— (71)

113  117  1

PSW STG KEY 19,20  LOG BITS  ABS ADDR  PD CLS  PD SET  OP CODE  DW LNTH  ST REQ  EX SIG  PID

FROM MS CTRLS  BUS TO MS

(START XI)  (RESET LCL SC BUSY T)  (NOT BUSY)

TO FIG.7  TO FIG. 8C  TO FIG 7

0 051 745

8

FIG.7
(SC CD CONTROLS)

0 051 745

**FIG.8A**

FROM DIRECTORY REG(FIG6)

0 051 745

FIG.8B

(FROM BCE FIG 5 RESET INV/CO)

113

LCL SC BUSY T (FIG 6)

≥1

≥1

(SC NOT BUSY)

1

R    S

INV BUSY T

&

CD CLS | CD SET | INV | ARO | CO

201

S    R

CO BUSY T

S    R

CD0 CNFT T

137

116

SC CMD REG

(RESET LCL SC BUSY T)

≥1

1

S

SC CMD REQ T

&

136

S    R

CD0 ATRO T

MP ATRO SIG FROM FIG 7

130

0 051 745

137

(CD(I) ROD SIG)

(TO CMD REG 65)

131

FIG.8

| FIG 8A | FIG 8C |
|--------|--------|
| FIG 8B |        |

(TO SC CMD REQ T 66 IN BCE0)

(TO BCE0 FIG 5)

(CD0 ATRO SIG)

(CD0 CNFT SIG)

TO FIG 7

FIG. 8C

# FIG.9

(SC RELEASE AND STATUS CIRCUITS)

# FIG.10 (CD ADDRESSING CKTS)

LOGICAL BITS BITS 19,20

ABS ADDR BITS 21-24

FROM FIG 6 (START XI)

CD SET SELECT REG (FOR CD WRITE)

(PD SET FROM LRU)

| 0 | 1 | 2 | 3 |

DAR LTHS (19) (20) (21) — — — — (24)

DAR TGRS (19) (20) (21) — — — — (24)

FLIP 19

FROM FIG. 11

TO FIG. 12

(SYNO SEARCH BITS 19,20)

INCR 19,20

TO FIG 8C (CD CLASS)

(SELECT CD SET)

# FIG.11 (SYNONYM SEARCH ALTER CKTS)

TO FIG 6
PID(XI CMD)

2KB MODE

(TO FIG 6)
(RESET LCL SC BUSY T)

START XI

(FLIP 19)

TO FIG. 10

(INCR 19,20)

| T6 | | T5 | | T4 | | T3 | | T2 | | T1 |

(UPDATE CD TIME FOR 2KB MODE)

XI SEARCH CYCLE (TO FIG. 12)

(UPDATE CD)

(UPDATE CD TIME FOR 4KB MODE)

# FIG.12    (SYNO CAPTURE CIRCUITS)

CD SYNO BITS 19, 20
TO BCE ∅ FIG. 5 & FIG.14

# 0 051 745

## FIG. 13
### (BCE RESPONSE CONTROLS)

TO CMD REG 45 (IN FIG 5)

SET OFF V BIT → TO PD INPUT REG (IN FIG.15)

SET OFF X BIT

ENCODER

≧ 1

ILE

CERO

CO

(TO FIGS.5,14,15,16)

(CD CLASS ADDR)

(CD SET ADDR)

≧ 1

S

TIMING T

RESET TO 65 & 66 (IN FIG 5)

CH BIT TEST SIG (FROM FIG.16)

1

≧ 1

≧ 1

(6)  (4)

G  G  &  &  &  &

(CD CLS ADDR)  (CD SET ADDR)  (INV BIT)  (ARO BIT)  (CO BIT)

FROM SC CMD REG 65 (IN FIG.5)

FROM SC REQ T 66 (IN FIG 5)

16

0 051 745

# FIG.14
(PD CLASS ADDRESSING CONTROL CIRCUITS IN BCE)

17

FIG.15 (PD SET INPUT CONTROLS)

# FIG.16

(CHANGE BIT TEST CIRCUIT)

CD SET ADDR
(FROM FIG 13)

CH BIT TEST SIG
(TO FIG 13)

0 051 745

# FIG.17 (PD(I) MISS DETECTION CONTROLS)

## FIG.18